Europäisches Patentamt

European Patent Office

Office européen des brevets

(19)

(11) Numéro de publication : **0 145 512**
**B1**

(12) **FASCICULE DE BREVET EUROPÉEN**

(45) Date de publication du fascicule du brevet :
08.07.87

(51) Int. Cl.⁴ : **B 64 C 27/32**

(21) Numéro de dépôt : **84401752.5**

(22) Date de dépôt : **03.09.84**

(54) Dispositif à butées escamotables pour limiter les battements des pales d'un rotor principal de giravion.

(30) Priorité : **08.09.83 FR 8314311**

(43) Date de publication de la demande :
**19.06.85 Bulletin 85/25**

(45) Mention de la délivrance du brevet :
**08.07.87 Bulletin 87/28**

(84) Etats contractants désignés :
**DE GB IT**

(56) Documents cités :
**FR-A- 2 282 367**
**FR-A- 2 434 079**
**GB-A- 2 073 121**

(73) Titulaire : **AEROSPATIALE Société Nationale Industrielle**
**37 boulevard de Montmorency**
**F-75781 Paris Cédex 16 (FR)**

(72) Inventeur : **Leman, Jean-Luc Le Bel Ormeau**
**Bâtiment C3 avenue J.P. Coste**
**F-13100 Aix-En-Provence (FR)**
Inventeur : **Suzzi, Robert Jean**
**121, rue Saint-Pierre**
**F-13005 Marseille (FR)**

(74) Mandataire : **Lepeudry-Gautherat, Thérèse et al**
**Armengaud Jeune Cabinet Lepeudry 23 boulevard de Strasbourg**
**F-75010 Paris (FR)**

EP 0 145 512 B1

## Description

La présente invention concerne les dispositifs à butées escamotables destinés à limiter les battements des pales d'un rotor principal de giravion aux vitesses faibles ou nulle de rotation du rotor, et l'invention se rapporte plus particulièrement à un dispositif de ce type destiné à l'équipement d'un rotor de giravion comportant un moyeu comprenant un plateau supérieur et un plateau inférieur, et accouplé au pied de chaque pale du rotor par l'intermédiaire d'au moins un dispositif d'articulation sur lequel les axes de battement, de traînée et d'incidence de la pale correspondante se coupent en un seul point, et qui comprend une unique broche de liaison aux plateaux et de retenue de la pale correspondante au moyeu.

On sait que, lorsque qu'un rotor d'hélicoptère est arrêté ou tourne à faible vitesse, par exemple lors de la mise en rotation du rotor avant le décollage, ou bien lors du ralentissement de celui-ci avant son arrêt total, après l'atterrissage, la pale n'est plus soumise qu'à des forces centrifuges et à des forces aérodynamiques de portance qui sont nulles ou très réduites, si bien que la résultante de ces forces sur chacune des pales est inférieure au poids de la pale, de sorte que cette dernière pivote vers le bas autour de son articulation de battement. Le poids de chaque pale sollicite donc le dispositif d'articulation ainsi que la partie du moyeu sur laquelle ce dispositif est fixé, et, en particulier lorsque le dispositif d'articulation est constitué par un palier sphérique lamifié, le poids de la pale tend à déformer ce palier sphérique lamifié autour de l'axe de battement. Il peut en résulter que l'extrémité d'une ou de plusieurs des pales d'un tel rotor vienne heurter l'empennage de l'hélicoptère, sa cabine ou même éventuellement le sol, ce qui peut se traduire par des dommages importants, notamment lorsque le rotor tourne à faible vitesse. D'autre part, les rotors de ce type sont souvent équipés de pales relativement souples, qui, à l'arrêt du rotor ou lorsqu'il tourne à faible vitesse, sont très sensibles aux rafales de vent. Or celles-ci sont particulièrement violentes sur certaines plates-formes marines, flottantes ou fixes, en particulier pour la recherche pétrolière sous-marine, sur lesquelles de tels hélicoptères doivent se poser, ainsi que sur les navires munis d'une surface d'appontage pour hélicoptères. Il est évident que les efforts du vent sur les pales arrêtées ou tournant lentement augmentent encore les risques de collisions entre les extrémités des pales et des parties de l'hélicoptère ou de la plate-forme ou surface d'appontage à partir de laquelle il opère.

Pour ces raisons, un grand nombre de dispositifs à butées escamotables destinés à limiter les battements des pales des rotors d'hélicoptères ont déjà été proposés.

Notamment, le brevet des Etats-Unis d'Amérique n° 2 614 640 correspondant aux caractéristiques de la partie caractérisante de la revendication 1, décrit des butées inférieures indépendantes pour les différentes pales d'un rotor principal d'hélicoptère.

Chaque butée inférieure indépendante est portée par un premier levier, monté pivotant autour d'un axe sensiblement horizontal, fixé au moyeu. Sur la partie inférieure de ce premier levier sont articulés deux seconds leviers, portant des masselottes inférieures, et accouplés respectivement au premier levier par l'intermédiaire d'un ressort. La disposition de ces éléments est telle que, à l'arrêt du rotor, le ressort maintient chaque second levier dans une position presque verticale, dans laquelle il immobilise le premier levier, portant la butée, dans une position supérieure, où ladite butée peut limiter la déflexion de la pale correspondante vers le bas, tandis que, lorsque le rotor tourne à une vitesse suffisante, la force centrifuge appliquée à chaque masselotte, s'opposant à l'action du ressort, fait s'effacer les seconds leviers, qui, de ce fait, autorisent le pivotement vers le bas du premier levier, et l'escamotage de la butée correspondante.

Le brevet des Etats-Unis d'Amérique n° 2 719 593 décrit également des butées inférieures indépendantes pour les différentes pales du rotor principal d'un hélicoptère. Chaque butée indépendante comprend essentiellement un levier coudé, dont le premier bras forme une butée, et le second bras porte une masselotte. Le levier coudé est monté oscillant sur un pivot fixé horizontalement au moyeu du rotor. Un ressort agit sur le levier pivotant de façon à le maintenir, à l'arrêt du rotor, dans une position où son premier bras limite l'abaissement d'une pièce solidaire de l'articulation entraînée de la pale correspondante, de façon à limiter l'affaissement de cette dernière. Les deux bras du levier coudé forment un angle tel que la force centrifuge, qui est appliquée à la masselotte lorsque le rotor tourne, tend à surmonter la force du ressort et à faire pivoter ledit levier dans un sens tel que la butée de son premier bras s'éloigne vers le bas de ladite pièce solidaire de la pale correspondante, de façon à escamoter la butée.

Le brevet des Etats-Unis d'Amérique n° 2 465 674 décrit des butées inférieures indépendantes pour les différentes pales d'un rotor principal d'hélicoptère. Chaque butée inférieure est portée par un premier levier monté pivotant autour d'un axe sensiblement horizontal, fixé à un plateau formant le moyeu du rotor. Une masselotte est montée pivotante autour d'un autre axe horizontal, sur une plaque, elle-même coulissante en dessous dudit plateau, vers lequel elle est poussée par un ressort. Un second levier, portant cette masselotte, est lui-même accouplé au premier levier, portant la butée, de manière à faire pivoter ledit premier levier, pour une vitesse suffisante du rotor, jusqu'à une position d'effacement de la butée correspondante. Lors d'un abaissement du plateau cyclique, servant au réglage du pas des différentes pales du rotor, un poussoir vertical, actionné par le plateau cyclique, repousse vers le bas la plaque coulissante en comprimant le ressort correspondant, et cette plaque fait pivoter le premier levier, de façon à amener la butée correspondante dans une position de service que lui fait également prendre le second levier portant la masselotte, lorsque la vitesse du rotor s'abaisse. Ce système de butées est donc très compliqué et peu fiable.

Le brevet des Etats-Unis d'Amérique n° 4 368 006 décrit également des butées inférieures indépendantes pour les différentes pales d'un rotor, chaque butée comprenant deux bras pendulaires montés chacun autour d'un axe horizontal sur une partie en saillie radiale vers l'extérieur du support de l'axe de traînée de la pale correspondante. Chaque bras porte, à l'une de ses extrémités, une masselotte et présente, à son autre extrémité, une came arrondie, centrée sur l'axe de pivotement, et qui s'engage, lorsque le bras pendulaire est rappelé en position par un ressort, aux vitesses faibles ou nulle du rotor, contre une surface d'appui arrondie de forme complémentaire d'un patin solidaire de la structure de liaison au pied de pale, et qui présente également une rampe inclinée prolongeant la surface d'appui et destinée à empêcher tout grippage du patin contre la came de la butée, en position intermédiaire, tandis qu'en position escamotée par la force centrifuge, une surface plane du patin peut venir en appui contre une surface de butée plane de la partie en saillie du support de l'axe de traînée. Chaque bras pendulaire présente également deux butées par chacune desquelles il vient en contact avec l'une de deux autres surfaces de butée de la partie en saillie du support de l'axe de traînée, dans les deux positions extrêmes du bras pendulaire.

Ces différentes réalisation connues ont toutes pour inconvénient de ne pas se prêter à une adaptation favorable sur les moyeux constitués essentiellement de deux plateaux superposés et perpendiculaires à l'axe de rotation du rotor, car elles impliquent la présence de nombreux éléments rapportés, présentant de nombreuses surfaces de butée, tels que des axes pivot, des leviers, des masselottes, des ressorts, etc disposés selon des agencements complexes, encombrants et relativement peu fiables, en saillie au-dessous du plateau inférieur, ce qui est défavorable sur le plan de la traînée aérodynamique, du poids et du coût.

Enfin, les butées inférieures indépendantes des réalisations connues et présentées ci-dessus sont inopérantes pour s'opposer aux mouvements des pales, lorsque, à l'arrêt du rotor ou aux faibles vitesses de rotation de celui-ci, les pales sont sollicitées vers le haut par une forte rafale de vent. Dans ce cas, la pale ainsi sollicitée peut prendre un angle de conicité élevé et retomber ensuite lourdement sur la butée inférieure en provoquant éventuellement une détérioration de cette butée inférieure et en subissant elle même un moment de flexion instantané très supérieur aux charges qu'elle peut normalement encaisser, ce qui peut conduire à sa mise hors-service.

Afin de remédier à ce dernier inconvénient, il a déjà été proposé, notamment par le brevet français n° 1 368 684, d'équiper un rotor de giravion de butées inférieures et supérieures indépendantes pour les différentes pales, la réalisation de chacune de ces butées, inférieures et supérieures, étant voisine de celles décrites dans les deux premiers brevets des Etats-Unis d'Amérique précités. Cependant, l'adaptation d'une telle réalisation à un moyeu constitué essentiellement de plateaux conduit à doubler la complexité, le poids et le coût qui caractérisent les réalisations ne comportant que des butées inférieures indépendantes.

Par ailleurs, il a déjà été proposé, dans le brevet français n° 2 434 079, une réalisation également complexe au niveau des butées indépendantes supérieures, puisque chacune de ces dernières comprend un levier coudé dont le premier bras forme une butée et dont le second bras porte une masselotte, ce levier coudé étant monté oscillant sur un pivot fixé sur la partie supérieure du moyeu du rotor, parallèlement à l'axe de ce dernier, et au voisinage du plan axial de symétrie de la pale correspondante au repos, et ce levier étant sollicité par un ressort qui le maintient, à l'arrêt du rotor, dans une position telle que son premier bras s'étende sensiblement parallèlement au plan axial de symétrie de la pale, les deux bras du levier coudé formant un angle tel que la force centrifuge, qui est appliquée à la masselotte lorsque le rotor tourne, tend à surmonter la force du ressort et à faire pivoter le levier dans un sens tel que la butée de son premier bras s'éloigne du pied de la pale. Cette réalisation est d'autant plus complexe qu'un organe fixé sur la partie supérieure du moyeu du rotor est prévu pour encaisser les chocs et les efforts reçus par la butée de chaque levier pivotant, cet organe étant par exemple une couronne fixée sur la partie supérieure du moyeu, concentriquement à l'axe du rotor, et aménagée pour supporter les pivots de tous les leviers. Mais une telle réalisation, complexe au niveau des butées supérieures, est acceptable dans la mesure où elle est combinée à une réalisation simple des butées inférieures, qui sont constituées par une butée inférieure commune pour toutes les pales et du type à anneau réciproque. On sait qu'un anneau réciproque constitue une butée inférieure beaucoup plus simple, moins coûteuse et plus fiable que des butées inférieures indépendantes pour les différentes pales, mais elle a pour inconvénient que, si une rafale de vent survient pendant les phases critiques de démarrage ou d'arrêt du rotor, comme cela se produit souvent, en particulier lorsqu'un hélicoptère doit se poser sur ou décoller d'une plate-forme marine ou d'un navire, dans un environnement où les vents sont violents et tourbillonnants, la rafale de vent repousse fortement vers le bas l'une des pales, qui appuie alors violemment sur l'anneau réciproque, de sorte que ce dernier, n'étant pas soumis à des efforts de réaction suffisants de la part des autres pales, prend une position extrême dans laquelle il n'empêche pas ladite pale, violemment repoussée vers le bas, d'atteindre une position dangereuse, de forte inclinaison, et de venir éventuellement frapper ou même sectionner par son extrémité la queue ou la cabine de l'hélicoptère.

La présente invention a pour but de proposer un dispositif à butées escamotables, indépendantes, limitant le mouvement de battement des pales vers le bas et de préférence également vers le haut, qui soit bien adapté à l'équipement des moyeux à deux plateaux, en particulier du type dans lequel chaque pale est raccordée au moyeu par un dispositif d'articulation pour lequel les trois axes d'articulation de chaque pale se coupent en un seul point, et qui comprend une unique broche de liaison aux plateaux et de retenue de la pale correspondante.

L'un des buts de l'invention est de proposer un dispositif du type précité qui soit mécaniquement plus compact, plus simple et plus robuste que les réalisations connues, tout en étant moins lourd et moins coûteux que ces dernières, et en présentant une trainée aérodynamique plus réduite.

Un autre but de l'invention est de proposer un dispositif à butées escamotables particulièrement avantageux lorsque le dispositif d'articulation de chaque pale au moyeu est un palier sphérique lamifié, afin de permettre la manœuvre du pas des pales, aux vitesses faibles ou nulle du rotor, ainsi que de faciliter le repliage des pales après l'arrêt du rotor, sans endommager les paliers sphériques lamifiés, et sans nécessiter, pour le repliage des pales, d'outillage spécial tel que celui décrit par exemple dans le brevet français n° 2 423 396.

Un autre but encore de l'invention est de proposer un dispositif à butées escamotables offrant une capacité améliorée d'arrêt et de lancement du rotor par grand vent, en particulier pour des hélicoptères devant opérer à partir de navires ou de plates-formes en mer, sans présenter l'inconvénient des anneaux réciproques et sans cependant être aussi désavantageux que les systèmes à butées indépendantes des réalisations de l'état de la technique.

A cet effet, le dispositif à butée selon l'invention, destiné à limiter les battements des pales d'un rotor principal de giravion du type présenté ci-dessus, c'est-à-dire comprenant un plateau supérieur et un plateau inférieur, et accouplé au pied de chaque pale par l'intermédiaire d'au moins un dispositif d'articulation sur lequel les axes de battement, de trainée et d'incidence de la pale correspondante se coupent en un seul point, et qui comprend une unique broche de liaison aux plateaux et de retenue de la pale correspondante au moyeu, est un dispositif à butées comprenant, pour chaque pale, une butée inférieure indépendante, constituée d'un organe d'appui et d'une masselotte portée à l'extrémité d'un bras de l'organe d'appui, et montée pivotante sur le moyeu, ainsi qu'une portée inférieure solidaire du pied de pale ou d'un organe de liaison reliant le pied de pale au dispositif d'articulation, et située sous ledit pied de pale ou ledit organe de liaison, la butée inférieure étant soumise à l'action d'un ressort de rappel de sorte que la position de la butée inférieure résulte de l'équilibre entre la force centrifuge et la force de rappel élastique du ressort, en fonction du régime de rotation du rotor, et qu'aux vitesses faibles ou nulle du rotor, le ressort rappelle la butée inférieure dans une position de coopération de l'organe d'appui et de la portée inférieure, afin de limiter les battements de la pale vers le bas, tandis qu'aux vitesses élevées du rotor, la force centrifuge escamote la butée inférieure à l'encontre du ressort en la faisant pivoter, afin que l'organe d'appui ne s'oppose pas aux battements vers le bas de la pale, et se caractérise en ce que l'organe d'appui a sensiblement la forme d'un galet bombé qui présente un évidement circulaire par lequel il est monté pivotant autour de l'axe de l'unique broche de retenue de la pale correspondante au moyeu, au-dessus du plateau inférieur, et une partie en saillie vers l'extérieur par rapport à l'axe de l'évidement circulaire et au moins partiellement délimitée par une surface de butée convexe contre laquelle la portée inférieure est destinée à venir en contact.

Avantageusement, afin de pouvoir vérifier si les commandes de vol sont en bon état, sans endommager les butées inférieures, le dispositif selon l'invention se caractérise de plus en ce que, sur chaque butée inférieure, la surface de butée convexe s'étend, dans une direction perpendiculaire à l'axe de la broche de retenue, sur toute la plage de pas de la pale correspondante, entre deux positions extrêmes qui correspondent, l'une au pas minimum obtenu lorsque les pas cyclique et collectif sont minimum, et l'autre, au pas maximum, obtenu lorsque les pas cyclique et collectif sont maximum, et de sorte que pour un pas moyen, obtenu lorsque le pas cyclique est nul et le pas collectif petit, et à l'arrêt du rotor, le contact entre la portée inférieure et la surface de butée convexe s'effectue dans une position intermédiaire, afin qu'aux vitesses faibles ou nulle du rotor, le contact entre la portée inférieure et la surface de butée convexe ne soit pas rompu lorsque l'inclinaison de la pale est modifiée par la manœuvre des commandes de vol. Dans ce cas, en effet, la portée peut entrainer le galet bombé lorsque le pas de la pale est changé, et le galet peut donc se mouvoir de part et d'autre de sa position d'équilibre pour couvrir la plage de pas.

Afin de constituer aux vitesses élevées du rotor une butée limite extrême vers le bas pour chaque pale, la partie en saillie de l'organe d'appui correspondant se prolonge, d'un côté de la surface de la butée convexe, par une portion sensiblement rectiligne contre laquelle peut venir s'appuyer la portée inférieure correspondante lorsque la pale correspondante a tendance à prendre un angle négatif trop accentué risquant de l'amener au contact du fuselage du giravion.

Avantageusement, afin que la surface de butée convexe de chaque organe d'appui puisse s'adapter aux différents débattements angulaires de la pale correspondante sans être endommagée, la surface de butée est telle que son intersection avec un plan perpendiculaire à l'axe de la broche correspondante ou avec un plan passant par l'axe de cette broche a sensiblement la forme d'un arc de cercle dont le centre est situé du côté de l'axe de la broche.

Dans une forme de réalisation simple, chaque portée inférieure présente une piste plane de contact avec la surface de butée convexe correspondante, cette piste plane étant perpendiculaire à l'axe d'incidence de la pale correspondante. Mais il est également possible que chaque portée inférieure présente une piste concave de contact avec la surface de butée convexe correspondante, la piste concave ayant alors un rayon de courbure supérieur à celui de la surface de butée convexe correspondante.

Chaque butée inférieure est dimensionnée pour être escamotée par la force centrifuge de préférence, lorsque la vitesse du rotor atteint sensiblement la moitié du régime de rotation nominal.

Dans une forme préférée de réalisation, qui est destinée à l'équipement d'un rotor dont le dispositif d'articulation de chaque pale au moyeu est un palier sphérique lamifié comprenant un élément rigide radial interne, mobile par rapport aux plateaux, et sur lequel est retenue une boucle rigide contournant de façon continue le palier sphérique lamifié et solidaire de l'ossature résistante de la pale correspondante ou d'un organe de liaison solidarisé au pied de la pale correspondante, ainsi qu'un élément rigide radial externe, fixé entre les bords des plateaux, à la façon d'une entretoise, et constitué d'un manchon dont l'alésage est traversé par l'unique broche de liaison, autour de laquelle la pale correspondante peut être pivotée, le dispositif à butées escamotables selon l'invention se caractérise de plus en ce que l'organe d'appui de chaque butée inférieure est monté pivotant par son évidement circulaire autour d'une bague anti-frottement montée à ajustage serré autour de l'extrémité inférieure du manchon correspondant et sur laquelle est accrochée une extrémité du ressort de rappel de la butée inférieure.

Cette réalisation, qui présente de nombreux avantages précisés ci-dessous, est plus particulièrement destinée à être utilisée sur des moyeux à plateaux reliés aux pales du rotor par des paliers lamifiés sphériques directement intégrés dans le pied des pales, tels que décrits dans la demande de brevet français n° 81 22 027 (FR-A-25 16 891). Mais il est également possible d'utiliser une telle réalisation sur des moyeux dont les deux plateaux sont reliés par chaque palier lamifié sphérique à une chape radiale de liaison au pied de pale correspondant, ladite chape étant de préférence double et évidée dans sa partie tournée vers le moyeu pour permettre le libre-passage du palier, comme cela est décrit dans la demande de certificat d'addition français n° 79 11 585 (FR-A-24 56 034). Dans ces différents moyeux, la position de chaque pale en traînée est déterminée, en particulier aux vitesses faibles ou nulle du rotor, par une contrefiche de rappel élastique en traînée à amortissement incorporé se présentant, de préférence, sous la forme d'un organe constitué par un empilement alterné de plaques rigides métalliques ou composites et de plaques d'un matériau visco-élastique à grande rémanence aux déformations et ayant ses extrémités interne et externe accouplées chacune par une rotule respectivement au moyeu et au pied de la pale correspondante, le centre de la rotule de l'extrémité externe étant voisin de l'axe de battements de la pale, lequel passe par le centre du palier sphérique lamifié correspondant.

En ce qui concerne la réalisation des moyeux, il est possible que le fût central du moyeu et le plateau supérieur constituent un premier élément monobloc métallique fixé, par exemple, par une couronne de boulons au plateau inférieur constituant lui-même un second élément monobloc métallique avec la partie supérieure du mât rotor, mais il est également possible que le fût central du moyeu, solidaire du plateau supérieur, soit fixé, toujours par une couronne de boulons, au plateau inférieur, lui-même solidaire de la partie supérieure du mât rotor. Enfin, il est possible que, conformément à la demande de brevet français n° 82 11988 (FR-A-25 29 860), le moyeu comprenne deux plateaux réalisés en matériaux composites et comprenant un flasque stratifié, constitué par un empilement de couches de tissus de fibres à haute résistance mécanique, entouré par une ceinture de stratifils de fibres à haute résistance mécanique.

Un avantage important de la réalisation conforme à l'invention et présenté ci-dessus est que, lors du repliage d'une pale, c'est l'ensemble constitué de la pale, du palier sphérique lamifié et de la butée inférieure qui pivote autour de l'axe de l'unique broche de liaison aux plateaux et de retenue de la pale. On sait que les paliers lamifiés sphériques sont réalisés pour travailler essentiellement en compression, et que, lors du repliage d'une pale, une composante importante de l'effort latéral est introduite dans les couches alternées métalliques et en élastomère du palier lamifié correspondant, et sollicite ces couches en cisaillement, donc dans de mauvaises conditions. Cet inconvénient est éliminé dans le dispositif selon l'invention, du fait du pivotement d'ensemble mentionné ci-dessus autour de la broche de retenue de la pale, cette dernière restant en appui et se déplaçant, par l'intermédiaire de la piste de sa portée inférieure, sur la surface de butée convexe de la butée inférieure.

Afin de réduire les risques d'endommagement du rotor lorsque, à l'arrêt ou tournant à faibles vitesses, il est soumis à des rafales de vent violentes, qui peuvent tendre à relever les pales autour de leur axe de battement, le dispositif à butées escamotables selon l'invention comprend, de plus, pour chaque pale, une butée supérieure indépendante, limitant le mouvement de ladite pale vers le haut constituée d'un organe d'appui et d'une masselotte portée à l'extrémité d'un bras de l'organe d'appui, et montée pivotante sur le moyeu, ainsi qu'une portée supérieure solidaire du pied de pale ou d'un organe de liaison reliant le pied de pale au dispositif d'articulation, et située sur ledit pied de pale ou ledit organe de liaison, la butée supérieure étant soumise à l'action d'un ressort de rappel de sorte que sa position résulte de l'équilibre entre la force centrifuge et la force de rappel élastique du ressort, en fonction du régime de rotation du rotor, et qu'aux vitesses faibles ou nulle du rotor, le ressort rappelle la butée supérieure dans une position de coopération de l'organe d'appui et de la portée supérieure, afin de limiter les battements de la pale vers le haut, tandis qu'aux vitesses élevées du rotor, la force centrifuge escamote la butée supérieure à l'encontre du ressort en la faisant pivoter, afin que l'organe d'appui ne s'oppose pas aux battements vers le haut de la pale.

Par analogie avec la réalisation des butées inférieures, l'organe d'appui de chaque butée supérieure a également, de préférence, la forme sensiblement d'un galet bombé qui présente un évidement circulaire par lequel il est monté pivotant autour de l'axe de l'unique broche de retenue de la pale au moyeu, au-dessous du plateau supérieur, et une partie en saillie vers l'extérieur par rapport à l'axe de l'évidement circulaire et au moins partiellement délimitée par une surface de butée cylindrique centrée sur l'axe de la broche, et contre laquelle la portée supérieure est destinée à venir en contact.

Une telle réalisation de butées hautes et de butées basses séparées et articulées sur l'axe de retenue de la pale est d'une conception simple et légère, et a pour avantage que les butées hautes et basses sont toutes logées entre les deux plateaux, ce qui est favorable à une bonne compacité et à une transmission sans déformations des efforts d'appui importants. Le principe de fonctionnement des butées hautes est identique à celui des butées basses, sauf qu'il n'est pas nécessaire d'assurer la continuité du contact des butées hautes avec les portées supérieures correspondantes, lors des mouvements de pas des pales, aux vitesses faibles ou nulle du rotor. Le rôle des butées hautes est de limiter l'amplitude des mouvements des pales, au sol, lors du démarrage ou de l'arrêt du rotor.

Afin d'augmenter l'efficacité des butées hautes, chaque portée supérieure présente de préférence une piste plane de contact avec la surface de butée cylindrique correspondante, ladite piste étant perpendiculaire à l'axe d'incidence de la pale correspondante. De plus, chaque butée supérieure est escamotée par la force centrifuge lorsque la vitesse atteint sensiblement le quart du régime de rotation nominal.

Par analogie avec les butées inférieures, l'organe d'appui de chaque butée supérieure est de préférence monté pivotant, par son évidement circulaire, autour d'une bague anti-frottement montée à ajustage serré autour de l'extrémité supérieure du manchon et sur laquelle est accrochée une extrémité du ressort de rappel de la butée supérieure correspondante.

Cependant, selon une seconde forme de réalisation, à laquelle il y a lieu d'accorder la préférence, le dispositif selon l'invention comprend de plus, pour chaque pale, une seconde masselotte inférieure montée pivotante par rapport au moyeu autour d'un axe perpendiculaire à l'axe de la broche correspondante et à l'axe d'incidence de la pale, et présentant une partie en forme de becquet tourné vers la broche et qui est engagé, aux vitesses faibles ou nulle du rotor, dans une encoche présentée par la portée inférieure correspondante, du côté opposé à la broche, sous l'effet du rappel élastique exercé radialement et vers l'intérieur par un second ressort sur la seconde masselotte déplacée vers la portée inférieure, afin de bloquer les battements de la pale vers le haut, tandis qu'aux vitesses élevées du rotor, la seconde masselotte est escamotée radialement vers l'extérieur par la force centrifuge, qui la fait pivoter à l'encontre du second ressort et la dégage de la portée inférieure, de sorte qu'elle ne puisse s'opposer aux battements vers le haut de la pale. Cette variante présente donc un ensemble combiné de butées haute et basse monté autour de l'axe de retenue de la pale et regroupé à la base de la liaison de la pale au moyeu. Dans cette variante, chaque seconde masselotte, qui s'intègre au système constitué par la butée inférieure et la portée inférieure correspondantes, est écartée, en vol, par la force centrifuge et permet à la pale de décoller de son appui sur le galet bombé de la butée inférieure correspondante, par l'intermédiaire de la portée inférieure correspondante. Lorsque le rotor est arrêté, cette seconde masselotte sert donc de butée haute, en raison de sa structure en forme de becquet, à sa partie supérieure, qui vient s'engager dans l'encoche correspondante ménagée dans la face de la portée inférieure qui est tournée vers la pale. Dans cette réalisation, la pale ne peut s'échapper vers le haut sous l'action du vent, même lorsque ce dernier est violent et souffle en rafales. Il en est de même lors du démarrage ou de l'arrêt du rotor, respectivement avant ou après que la pale ne soit soumise à une force centrifuge qui l'emporte sur son poids.

De plus, afin d'autoriser les mouvements de pas des pales, l'encoche de chaque portée inférieure présente avantageusement un profil de révolution concave autour de l'axe d'incidence de la pale correspondante. De préférence, lorsque la portée inférieure est en appui par sa piste contre la surface de butée convexe, le becquet est reçu avec du jeu dans l'encoche correspondante, ce petit jeu permettant un enclenchement et un escamotage plus faciles du becquet sous l'action de la force centrifuge.

Dans un exemple préféré de réalisation, la seconde masselotte est portée à l'extrémité radiale externe d'une chape dont les deux bras sont pivotés de part et d'autre d'un talon en saillie radiale vers l'extérieur que présente une bague entourant, sous le plateau inférieur, l'extrémité inférieure de la broche correspondante, le second ressort étant un ressort à boudin, longitudinal et de traction, qui s'étend entre les deux bras de la chape et relie la seconde masselotte au talon. Dans ce cas, il est préférable que l'extrémité inférieure de la broche porte une tête de retenue élargie, présentant un méplat coopérant avec un épaulement du talon, afin d'empêcher toute rotation de la broche.

Que les butées supérieures soient intégrées ou non aux butées inférieures, afin de donner au dispositif un maximum d'efficacité sous l'effet de la force centrifuge, d'une part, et de permettre, d'autre part, le libre basculement du palier lamifié sphérique lors du battement de la pale correspondante, la position de la masselotte de chaque butée inférieure et/ou, le cas échéant, de chaque butée supérieure, par rapport à l'axe de la broche correspondante, est inclinée d'environ 45° sur l'axe d'incidence de la pale correspondante et vers l'intérieur par rapport à l'axe de la broche.

De même, quelque soit la conception adoptée pour la réalisation des butées supérieures, chaque butée inférieure et/ou, éventuellement, supérieure est élastiquement rappelée par un ressort de traction à boudin longitudinal, s'étendant sensiblement radialement par rapport à l'axe de la broche, entre la masselotte correspondante et un point d'ancrage fixe par rapport au moyeu, ou par un ressort de traction à spirale, qui entoure la broche et est accroché par une extrémité à l'organe d'appui correspondant et par l'autre extrémité à un point d'ancrage fixe par rapport au moyeu.

Enfin, si chaque pale du rotor comprend un levier de commande de pas en forme d'étrier, dont les branches s'étendent transversalement l'une par dessus et l'autre par dessous le pied de pale ou l'organe de liaison au pied de pale correspondant, la portée inférieure correspondante du dispositif selon l'invention est de préférence fixée à la face inférieure de la branche inférieure de l'étrier, et, le cas échéant, la portée supérieure correspondante est fixée à la face supérieure de la branche supérieure de cet étrier.

La présente invention sera mieux comprise à l'aide de la description donnée ci-après, à titre non limitatif, d'exemples de réalisation en référence aux dessins annexés sur lesquels :

la figure 1 représente une vue en coupe partielle verticale passant par le plan médian d'une pale, d'un rotor équipé d'un premier exemple de dispositif à butées escamotables selon l'invention,

les figures 2 et 3 sont des vues en coupe transversale partielle du rotor représenté sur la figure 1, respectivement selon les lignes II-II et III-III,

les figures 4 et 5 sont des vues analogues à la figure 1 d'un moyeu de rotor équipé d'un deuxième exemple de dispositif à butées escamotables selon l'invention, respectivement dans les positions occupées à l'arrêt et en vol,

la figure 6 est une vue en coupe selon VI-VI de la figure 4,

la figure 7 est une vue en perspective avec coupe et arrachement partiel représentant une butée haute et basse combinée du second exemple de réalisation,

les figures 8 à 11 représentent schématiquement en coupe transversale quatre positions différentes d'une butée basse du premier exemple de réalisation conforme à l'invention,

les figures 12 et 13 représentent respectivement, en coupe transversale et de manière schématique, les positions au sol et en vol d'une butée supérieure du premier exemple conforme à l'invention, rappelée par un ressort à spirale,

les figures 14 et 15 sont des figures analogues aux figures 12 et 13 pour une butée supérieure rappelée par un ressort à boudin longitudinal, et

les figures 16 et 17 sont des vues schématiques en coupe transversale représentant respectivement les positions au sol et en vol d'une butée inférieure du second exemple de réalisation conforme à l'invention.

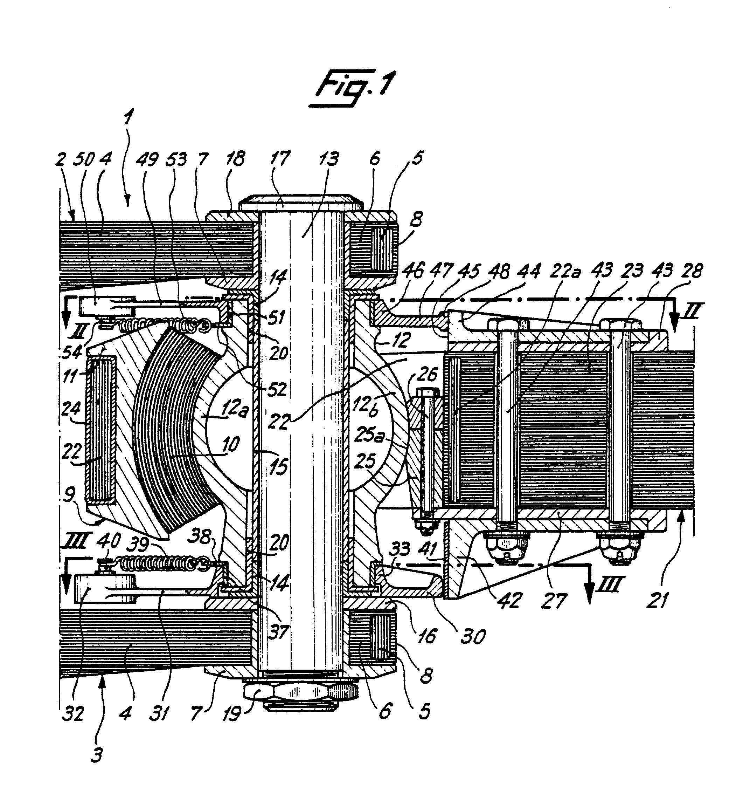

La structure du moyeu de rotor d'hélicoptère représenté partiellement sur les figures 1 à 3, ainsi que la structure des pales de ce rotor et leur liaison au moyeu sont telles qu'elles sont décrites respectivement dans les demandes de brevet français 82 11 988 et 81 22 027. On rappellera simplement que le moyeu représenté sur la figure 1 comprend essentiellement trois éléments, qui sont une entretoise (non représentée), de forme générale cylindrique, dans le prolongement du mât rotor, et deux plateaux identiques dont l'un (2) est le plateau supérieur et l'autre (3) le plateau inférieur. Les deux plateaux (2) et (3) sont fixés à l'entretoise de la manière décrite dans la demande de brevet français 82 11 988, à laquelle on se rapportera avantageusement pour davantage de précision. Alors que l'entretoise et les organes de fixation de celle-ci aux deux plateaux (2 et 3) sont des éléments métalliques, les deux plateaux (2 et 3) sont en matériaux composites. Chaque plateau (2 et 3) comprend un flasque stratifié (4) constitué par un empilement de couches de tissus de fibres à haute résistance mécanique et entouré d'une ceinture (5) de stratifils de fibres à haute résistance mécanique. Chaque flasque (4) a une forme en étoile présentant autant de branches que de pales du rotor. De plus, chaque branche du flasque (4) en étoile est plus large du côté de la portion centrale du flasque (4) que du côté de son extrémité radiale externe (6), à faces supérieure et inférieure planes, qui est avantageusement élargie et arrondie et présente un alésage dans lequel est montée une bague épaulée (7). La ceinture de stratifils (5) en fibres de carbone par exemple, et qui entoure chaque flasque (4), est serrée contre la tranche des branches de ce flasque (4) en étant reçue dans des alvéoles ouverts vers l'extérieur dans la tranche des extrémités radiales externes (6) de chaque branche du flasque (4), puis la ceinture de stratifils (5) est extérieurement protégée par une nappe supplémentaire de tissu (8). Comme cela est représenté sur la figure 1, les plateaux supérieur (2) et inférieur (3) identiques, s'étendant dans des plans sensiblement perpendiculaires à l'axe de rotation du rotor, sont disposés de sorte que les branches respectives des deux plateaux (2 et 3) soient exactement superposées et que leurs bagues épaulées (7) soient coaxiales.

Un palier sphérique lamifié, d'un type connu, jouant simultanément le rôle d'articulation de trainée, de battement et d'incidence (pour la commande du pas), et dont l'ensemble est désigné par (9) est monté entre les extrémités (6) de chaque paire de branches superposées des deux plateaux (2 et 3). Les fonctions du palier (9) sont bien connues : il reprend les efforts centrifuges et les efforts radiaux s'exerçant sur la pale à laquelle il est relié, avec de faibles déformations, et il permet les mouvements angulaires de pas, avec un rappel élastique limité, ainsi que les oscillations de battement et de trainée de la pale. Ces caractéristiques résultent de la structure en sandwich de la partie centrale (10) de ce palier (9), constituée d'un assemblage de coupelles métalliques, en portions sphériques, alternées avec des couches minces d'élastomère qui présente une bonne tenue en fatigue et d'excellente qualité d'adhérence aux métaux, deux armatures, dont l'une (11) présente une surface sphérique concave et l'autre (12) une surface sphérique convexe, étant adhérisées par moulage à la partie centrale (10) du palier sphérique lamifié (9). L'armature (12), en position radiale externe, et présentant la surface sphérique convexe, est constituée par un manchon métallique dont la paroi externe présente deux renflements (12a et 12b) en forme de calotte sphérique évidée, centrée sur l'axe longitudinal de la pale. Le manchon (12) se place entre les extrémités des branches superposées des plateaux supérieur (2) et inférieur (3), munis de leur bague épaulée (7), et les raccorde l'un à l'autre par l'intermédiaire d'une broche unique (13). Cette broche métallique creuse (13) traverse les bagues (7) et un ensemble de deux bagues épaulées anti-friction (14) et d'une douille (15) formant entretoise entre l'épaulement de la bague (7) supérieure et une rondelle (16) anti-friction reposant sur l'extrémité de la branche correspondante du plateau inférieur (3). Cette broche (13) présente une tête plate élargie (17) retenue contre une rondelle anti-friction (18) reposant contre l'extrémité de la branche correspondante du plateau supérieur (2), par le serrage d'un écrou (19) vissé et de préférence freiné sur l'extrémité inférieure filetée de la broche (13) saillant sous le plateau inférieur (3). Aux extrémités de l'alésage central du manchon (12), sont disposées des bagues épaulées anti-frottement (20) montées à ajustage serré dans celui-ci et dimensionnées de telle sorte que leur diamètre interne présente un léger jeu par rapport au diamètre externe des bagues (14) et que la cote d'empilement du manchon (12) et des deux épaulements des bagues (20) présente également un léger jeu par rapport à la distance entre les faces internes de l'épaulement de la bague supérieure (7) et de la rondelle inférieure (16).

Cette disposition permet ainsi un montage et un démontage aisé de la pale (21) sur le moyeu (1) par une seule broche (13) et, si besoin est, autorise sans démontage de ladite broche (13), le pivotement angulaire du manchon (12) autour de l'axe de la broche (13) afin de permettre le « repliage » de la pale (21) correspondante.

L'autre armature (11), en position radiale interne, du palier sphérique lamifié (9) est constituée par un bloc métallique sensiblement en forme de tronc de pyramide dans la grande base duquel a été ménagée la portion de surface sphérique concave tournée vers le renflement sphérique (12a) du manchon (12), et dans la petite base duquel a été ménagée une gorge débouchant sur les faces latérales du bloc 11 et tournée vers l'entretoise centrale du moyeu (1).

Chaque pale (21) du rotor comprend des stratifils, dont chacun est de préférence constitué par un ensemble de fils de base, de filaments ou de fibres à haute résistance enduits et agglomérés parallèlement en un faisceau par une résine synthétique durcie, et qui constituent dans la zone du pied de la pale (21) une boucle rigide continue (22) se prolongeant dans la partie courante de la pale pour former progressivement le longeron résistant, au bord d'attaque, ainsi que des éléments du bord de fuite. Les deux parties en vis-à-vis de la boucle de stratifils (22) sont séparées l'une de l'autre par un bloc 23 d'un matériau de remplissage, qui délimite avec la partie d'extrémité de la boucle de stratifils (22) un espace libre constituant un logement pour le palier sphérique lamifié (9) que la boucle de stratifils (22) entoure de façon continue, en venant se loger dans la gorge de l'armature interne (11), avec interposition de couches de tissus de protection (24) en fibres à haute résistance, par exemple en fibres de carbone.

Entre le renflement (12b) du manchon (12) et la paroi du bloc de remplissage (23) qui est tournée vers l'axe du rotor, et qui est de préférence, à ce niveau, renforcée par quelques stratifils (22a) de l'ossature de la pale (21), est disposée une pièce (25) en deux parties, présentant une portée sphérique concave (25a) située en regard du renflement (12b). La pièce (25) est fixée par l'intermédiaire de deux boulons (26), sur la branche inférieure (27), s'étendant transversalement sous la pale (21), d'un levier de commande de pas de cette pale, en forme d'étrier dont la branche supérieure (28) s'étend également transversalement mais au dessus de la pale (21). La pièce (25), en forme de coin, constitue un dispositif de maintien et de blocage pour la boucle de stratifils (22) à fond de gorge dans l'armature radiale interne (11) du palier (9), principalement lors du lancement et/ou de l'arrêt du rotor, avec ou non accompagnement de rafale de vent. Le contact s'établissant entre le renflement (12b) du manchon (12) et le coin (25) évite la sortie intempestive de la boucle (22) de son logement et tout effet néfaste qui pourrait s'ensuivre. De plus, cette disposition facilite le montage de la pale (21) et libère le palier (9) d'une partie de l'effort tranchant vertical dû au poids de la pale (21) lorsque celle-ci n'est plus sous l'effet de l'effort centrifuge. Grâce au contournement de l'armature interne (11) du palier (9) par la boucle de stratifils (22) de la pale (21), cette dernière, dont le pied reçoit le palier (9), peut effectuer tous les débattements nécessaires autour du centre de ce palier (9) et la pale (21) peut aussi pivoter, pour son repliage, autour de l'unique broche (13) qui la retient au moyeu (1) par l'intermédiaire du palier (9). Enfin, le levier de commande de pas de chaque pale (21), qui est essentiellement constitué sous la forme d'un étrier dont les branches inférieure (27) et supérieure (28) s'étendent transversalement, respectivement au-dessous et au-dessus des deux parties en vis-à-vis de la boucle de stratifils (22) et du bloc de matériau de remplissage (23) du pied de la pale (21), est relié d'une part, à l'extrémité d'une biellette de commande de pas et, d'autre part, à l'extrémité externe d'une contre-fiche de rappel élastique en traînée à amortissement incorporé, laquelle est constituée de façon bien connue, d'un empilement alterné de plaques rigides et de plaques d'un matériau visco-élastique à grande rémanence aux déformations, tel qu'un élastomère de silicone. La contre-fiche (non représentée) qui permet d'entraîner les pales en rotation et de contrer élastiquement leurs oscillations en trainée dans le plan du rotor, et qui fait également office d'amortisseur de ces oscillations, ainsi que la biellette de commande de pas (également non représentée) sont articulées sur le levier de commande de pas par des rotules.

Le rotor qui vient d'être décrit est pratiquement identique à ceux faisant l'objet des deux dernières demandes de brevet français précitées. Cependant, il se distingue de ces moyeux par le fait qu'il comprend un dispositif de butées escamotables limitant les battements des pales.

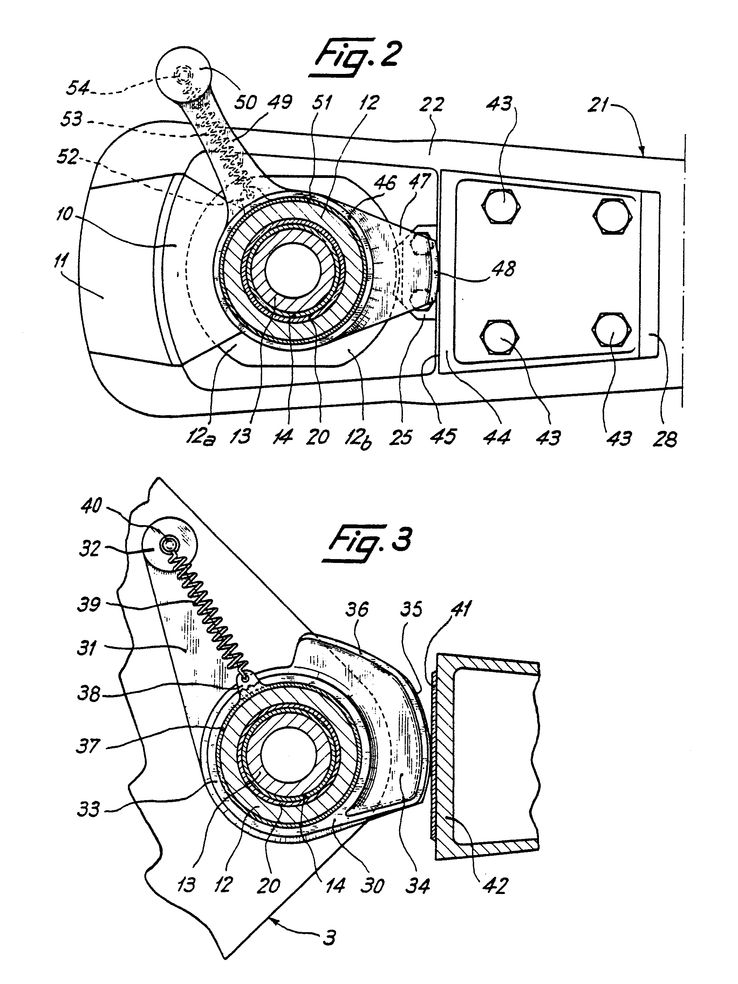

Comme représentée sur les figures 1 et 3, une butée basse constituée d'un organe d'appui en forme de galet bombé, (30) se prolongeant d'un bras (31) portant à son extrémité une masselotte (32), est montée pivotante autour de l'extrémité inférieure du manchon (12), au-dessus du plateau inférieur (3), et en appui sur la rondelle (16). L'organe d'appui (30) présente un évidement de section circulaire dans une partie centrale épaisse (33) qui est solidaire d'une partie excentrée (34) en saillie vers l'extérieur par rapport à l'axe de l'évidement circulaire. La partie excentrée (34) est formée d'un voile central mince entouré d'un rebord qui, dans sa partie la plus en saillie, est délimité par une surface externe convexe (35). Comme représentée sur la figure (3), celle-ci se prolonge vers la masselotte (32) par une surface externe (36) sensiblement plane ou très faiblement bombée. La surface convexe (35) est telle que son intersection avec un plan perpendiculaire à l'axe de l'évidement ou de la broche (13) ou avec un plan passant par cet axe est sensiblement un arc de cercle centré du côté de cet axe. Par son évidement l'organe d'appui (30) est monté en rotation autour d'une douille anti-frottement à collet (37) qui est ajustée serrée autour de l'extrémité cylindrique inférieure du manchon (12). Cette douille (37) repose par son extrémité inférieure contre l'épaulement de la bague (20), et son collet porte un bossage (38) d'accrochage d'une extrémité d'un ressort de traction, à boudin longitudinal, (39) dont l'autre extrémité est accrochée sur un téton central (40) portée sur la masselotte (32) sensiblement cylindrique. L'ensemble de la butée basse est ainsi réalisé et monté qu'au repos (figure 3), le ressort (39) s'étend radialement par rapport à l'axe de la broche (13), selon un axe incliné d'environ 45° sur l'axe d'incidence de la pale (21) correspondante, et vers l'intérieur par rapport à l'axe de la broche (13). La surface convexe (35) constitue une surface de butée contre laquelle peut venir s'appuyer la piste (41), plane et perpendiculaire à l'axe d'incidence de la pale correspondante (21) que présente en direction de la broche (13), une portée inférieure (42), de section en équerre, fixée contre la face inférieure de la branche inférieure (27) du levier de commande de pas en étrier par quatre boulons (43) qui assurent simultanément la solidarisation des branches (27 et 28) du levier à la pale (21) et la fixation, sur la face supérieure de la branche supérieure (28), d'une portée supérieure (44). Cette dernière présente, vers la broche (13), une piste (45), également plane et perpendiculaire à l'axe d'incidence de la pale (21), qui est destinée à venir en appui contre une surface de butée cylindrique dont l'axe est celui de la broche (13), et que présente l'extrémité épaisse et la plus en saillie (48) d'un prolongement excentré (47) d'un organe d'appui (46) d'une butée haute qui comprend également un bras (49) solidaire de l'organe (46) et portant une masselotte (50). L'organe d'appui (46) de la butée haute présente un évidement de section circulaire, par lequel il est monté pivotant autour d'une douille ou bague anti-frottement à collet (51) qui, par symétrie avec la bague ou douille (37) de la butée basse, est ajustée serrée autour de l'extrémité cylindrique supérieure du manchon (12), et se trouve en appui par son extrémité supérieure contre l'épaulement de la bague (20), de sorte que la butée haute est montée pivotante autour de l'axe de la broche (13), en dessous du plateau supérieur (2). La bague (51) présente un bossage (52) d'accrochage d'une extrémité d'un ressort de traction (53) à boudin longitudinal dont l'autre extrémité est accrochée sur un téton central (54) sous la masselotte (50). Comme pour la butée basse, au repos (figure 2) le ressort (53) s'étend radialement par rapport à l'axe de la broche (13), selon un axe incliné de 45° environ sur l'axe d'incidence de la pale (21), et vers l'intérieur par rapport à l'axe de la broche (13).

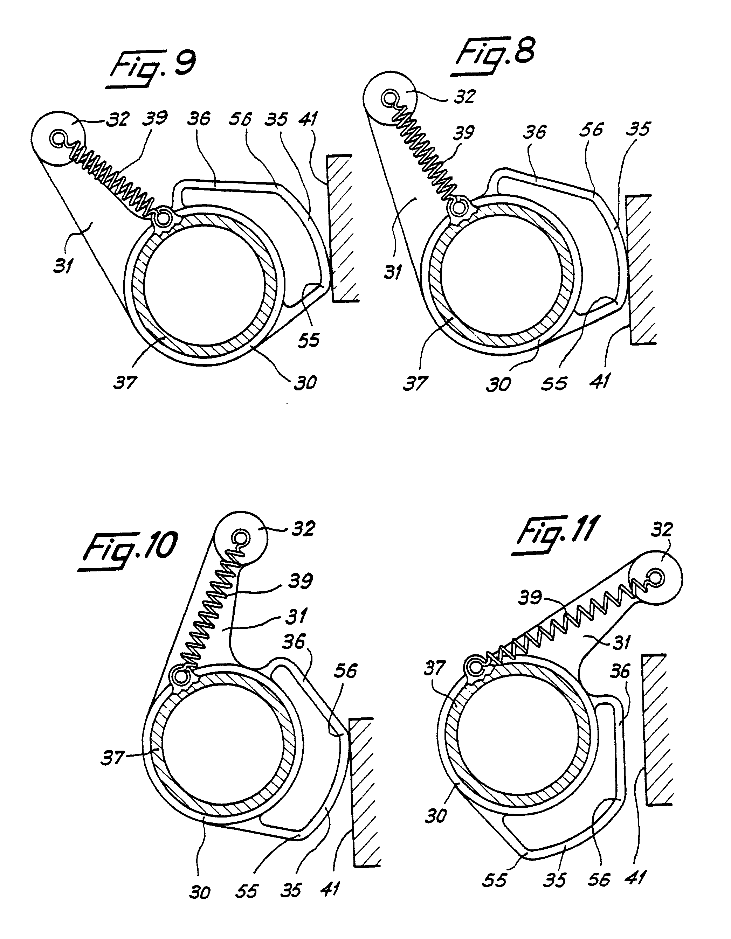

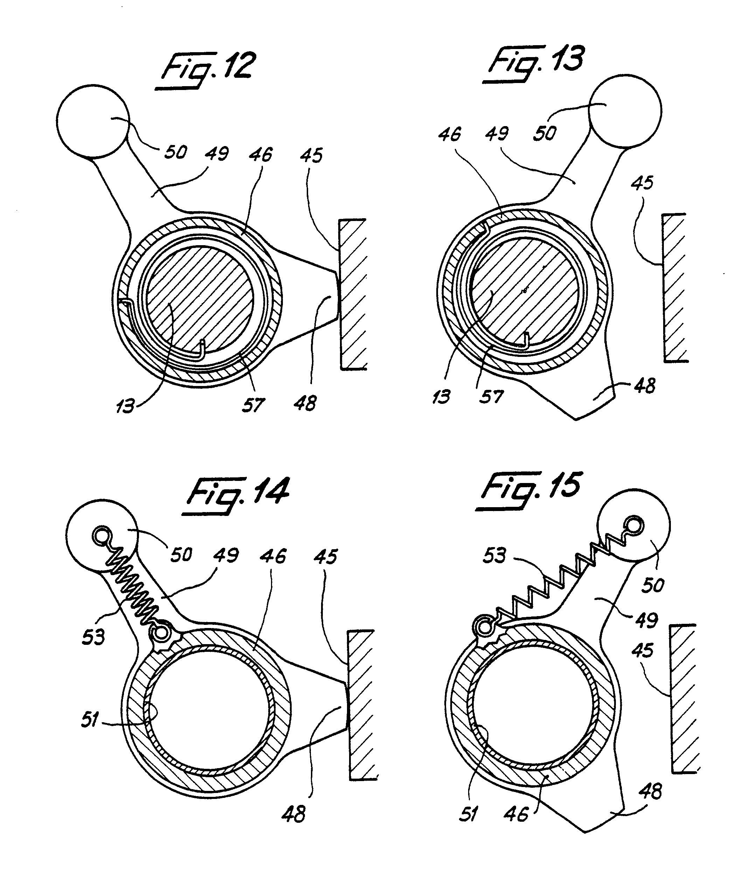

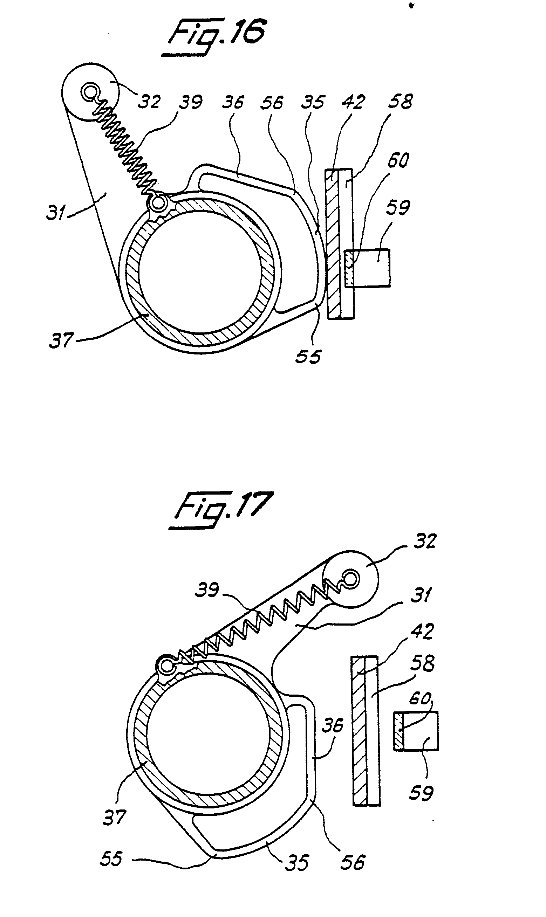

Le fonctionnement du dispositif à butées qui vient d'être décrit sera maintenant expliqué à l'aide des figures 9 à 11 pour les butées basses et des figures 14 et 15 pour les butées hautes.

On comprend que les butées basses et hautes, montées pivotantes, entre les deux plateaux (2 et 3), par leur organe d'appui respectif (30 et 46) autour de la broche (13) de retenue de la pale (21), sont du type escamotable sous l'effet de la force centrifuge lorsque celle-ci sollicite leur masselotte respective (32 et 50), à l'encontre des ressorts de rappel respectifs (39 et 53), qui déterminent, aux vitesses faibles ou nulle du rotor, les positions des butées telles que représentées respectivement sur les figures 3 et 8 pour les butées basses et sur les figures 2 et 14 pour les butées hautes.

A l'arrêt du rotor, la pale (21) est en appui par la piste (41) de sa portée inférieure, au niveau du levier de pas, contre la surface de butée convexe (35) de la butée basse qui n'autorise qu'un angle de battement faible (environ 1°) vers le bas de la pale (21) sous l'effet de son poids propre et éventuellement d'une rafale de vent, tandis que, simultanément, la butée haute est en position pour s'opposer à tout battement d'une pale vers le haut, dû à une rafale de vent qui entraînerait immédiatement l'appui de la piste (45) de la portée supérieure (44) contre la surface de butée cylindrique (48) de l'organe d'appui (46). Lorsque le rotor est arrêté, l'incidence de chaque pale correspond normalement à un pas moyen car le pas cyclique est nul et le pas collectif est en position de petit pas. Les surfaces de butée convexe (35) et cylindrique (48) respectivement des butées basse et haute sont réalisées pour que, dans cette configuration de la pale (21), l'appui contre les pistes (41 et 45) des portées inférieure (42) et supérieure (44) se fasse en position intermédiaire, entre les extrémités des surfaces de butée 35 et 48 dans une direction perpendiculaire à l'axe de la broche (13). En effet, comme les trois centres d'articulation de la pale (21) sont localisés au centre du palier sphérique lamifié (9), la butée basse est concernée non seulement par les mouvements de battement, mais également par les mouvements de pas et de traînée. Comme au sol, les mouvements de traînée sont négligeables, car la position de la pale (21) est donnée par la contre-fiche de rappel élastique en traînée, les mouvements de pas conditionnent donc la réalisation de la surface de butée convexe (35). Or, au sol et rotor arrêté, il faut pouvoir manœuvrer les commandes de vol et faire varier le pas des pales afin d'effectuer un réglage des commandes de vol et de s'assurer de leur bon état. Afin de permettre ce réglage et cette vérification, la surface de butée convexe (35) de l'organe d'appui en forme de galet bombé (30) de la butée basse s'étend, dans une direction perpendiculaire à l'axe de la broche (13), sur toute la plage de pas de la pale (21) correspondante. Cette surface de butée convexe (35) se présente donc comme une came qui s'étend entre deux extrémités (55 et 56) (voir figures 8 à 11) dont l'une, (55), du côté opposé à la masselotte (32), est en contact avec la piste (41) de la pale (21) (figure 9), lorsque le pas de cette dernière est minimum, ce qui correspond à un pas cyclique minimum (c'est-à-dire de valeur négative maximale) et un petit pas collectif, tandis que l'autre extrémité (56), du côté de la masselotte (32), est en contact avec la piste (41) (figure 10) lorsque le pas de la pale (21) est maximum ce qui correspond à un pas cyclique maximum positif et à un grand pas collectif.

La surface de butée convexe (35) permet donc d'assurer la continuité du contact entre la butée basse et la piste (41), au sol, à l'arrêt du rotor, lorsque l'on manœuvre les commandes de vol pour faire varier le pas entre ces valeurs maximum et minimum, ainsi qu'au lancement du rotor, lorsque ce dernier commence à tourner. Pendant ces phases, l'organe d'appui (30), entraîné par la piste (41), peut pivoter autour de la broche (13), de part et d'autre de sa position intermédiaire et d'équilibre dans laquelle le ressort (39) le rappelle, en couvrant la plage de pas, tout en restant en appui et en se déplaçant sur la piste (41).

La surface de butée cylindrique (48) de la butée haute ne s'étend pas, dans une direction perpendiculaire à la broche (13), dans une mesure aussi importante que la surface de butée convexe (35), car il n'est pas nécessaire d'assurer une continuité des contacts entre la butée haute et la piste (45) de la portée supérieure (44), lors des mouvements de pas, car le rôle essentiel des butées hautes est de limiter vers le haut l'amplitude du mouvement des pales, au sol, à l'arrêt et au démarrage du rotor.

Au lancement du rotor, les pales sont sollicitées par la force centrifuge et tendent à se tendre radialement en se soulevant de leur appui contre les butées basses. Lorsque la vitesse du rotor atteint le quart du régime nominal, la force centrifuge qui sollicite les masselottes (50) des butées hautes l'emporte sur le rappel des ressorts (53), de sorte que les butées hautes sont escamotées par rotation autour des broches (13). Chaque butée haute passe donc de la position de la figure 14 à celle de la figure 15. Lorsque la vitesse du rotor atteint la moitié du régime nominal, la force centrifuge qui sollicite les masselottes (32) des butées basses l'emporte sur le rappel des ressorts (39), de sorte que les butées basses sont à leur tour escamotées par rotation autour des broches (13) et chaque butée basse prend la position de la figure 11. La position des masselottes (32 et 50) à 45° par rapport à l'axe d'incidence des pales donne aux butées un maximum d'efficacité sous l'effet de la force centrifuge et permet le libre basculement de l'ensemble des paliers (9) lors des battements des pales. En vol, sous l'effet centrifuge et autour du régime nominal du rotor, les butées basses autorisent un battement vers le bas des pales de l'ordre de 7 à 8°. La position des butées, en fonction du régime rotor, est alors donnée par l'équilibre des efforts centrifuges, agissant notamment sur les masselottes et du rappel élastique des ressorts.

A l'arrêt du rotor, ce sont d'abord les butées basses qui sont rappelées en position de limitation des battements vers le bas du rotor, par les ressorts (39), puis les butées hautes sont rappelées en position de limitation des battements vers le haut, par les ressorts (53).

Les ressorts de traction à boudin (39 et 53) peuvent être remplacés par des ressorts à spirale, tels que le ressort (57), représenté sur les figures 12 et 13 sur une butée haute. Ce ressort à spirale (57) entoure l'extrémité supérieure du manchon (12) et est ancré par une extrémité recourbée dans une encoche ménagée dans l'organe d'appui (46), tandis que son autre extrémité recourbée est ancrée dans une pièce solidaire du manchon (12), par exemple une bague telle que (51) sur les figures 1 et 2.

Le dispositif de butées décrit ci-dessus est non seulement compact du fait de la disposition des butées basses et hautes entre les deux plateaux du moyeu, mais il offre un avantage de maintenance important : lors du repliage d'une pale du rotor vers l'arrière par exemple, l'ensemble constitué par la pale (21), le palier sphérique (9) et la butée basse correspondante est pivoté autour de la broche (13). Le repliage s'effectue simplement en bloquant la pale en incidence, à l'aide d'un outillage simple placé entre la broche (13) qui est creuse et un point de fixation sur la branche supérieure (28) du levier de commande de pas correspondant, puis en décrochant la contrefiche de rappel élastique en traînée et en tournant ensuite la pale d'un angle convenable autour de la broche (13).

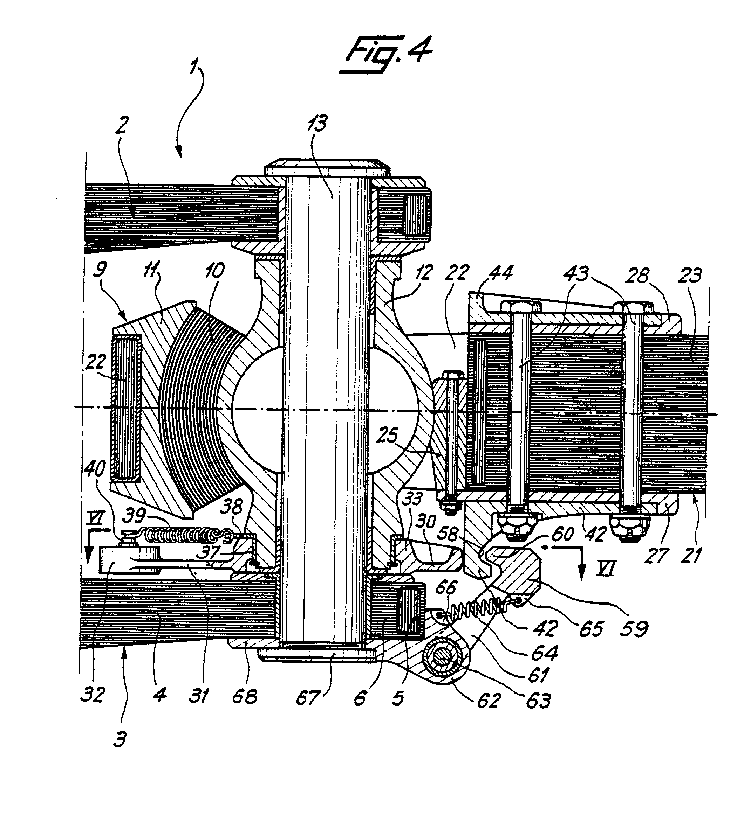

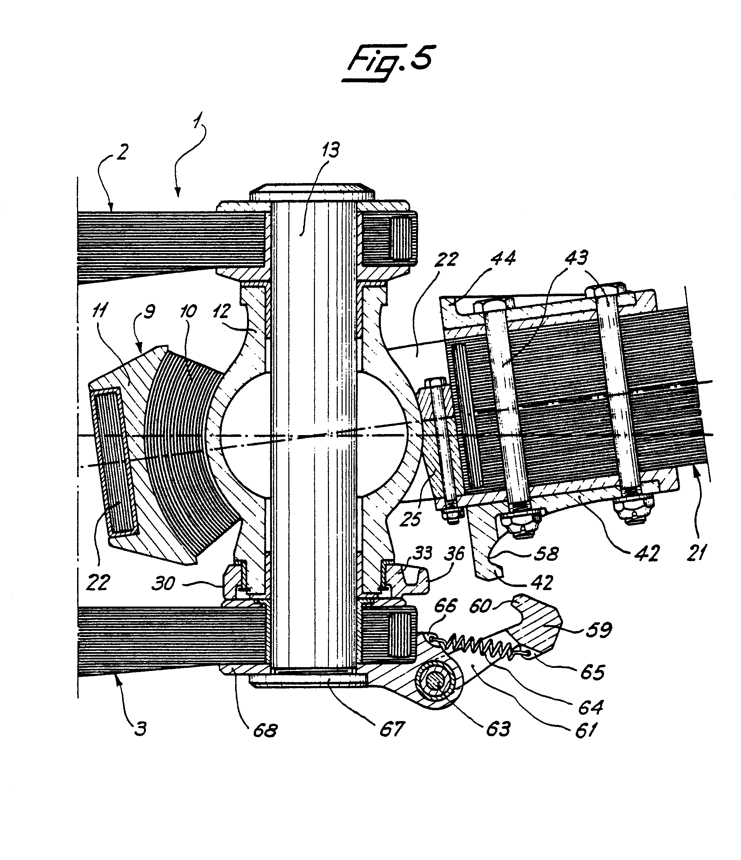

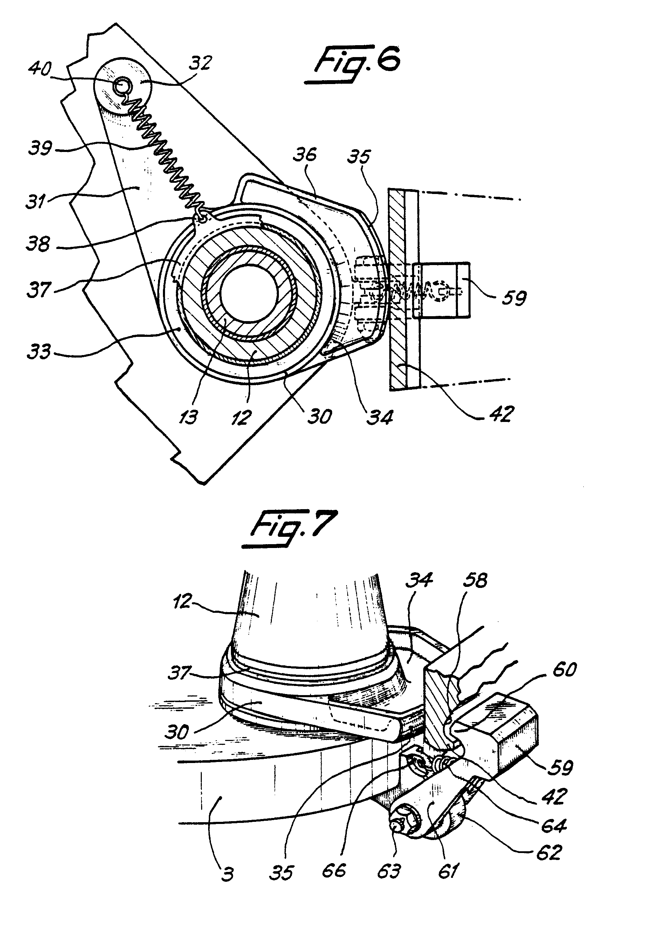

Le rotor représenté sur les figures 4 à 7 présente de nombreuses caractéristiques communes avec celui qui a été décrit en référence aux figures 1 à 3, de sorte que seules les différences entre ces deux réalisations méritent d'être mentionnées. Le rotor des figures 4 à 7 n'est plus équipé d'un dispositif à butées basses et hautes séparées, mais d'un dispositif dans lequel un ensemble combiné est regroupé à la base de la liaison de chaque pale au moyeu et joue à la fois la fonction d'une butée haute et d'une butée basse. Il n'y a donc plus d'organe d'appui supérieur (46) portant une masselotte supérieure (50) et présentant une surface de butée cylindrique (48), et qui pivote autour de l'extrémité supérieure du manchon (12) et coopère avec la piste (45) de la portée supérieure (44) de la pale (21). Par contre, on retrouve une butée basse identique à celle précédemment décrite, pivotant par l'évidement circulaire de son organe d'appui (30) (en forme de galet bombé présentant la surface de butée convexe (35)) autour de la bague (37) serrée autour de l'extrémité inférieure du manchon (12), et dont la masselotte (32) à l'extrémité du bras (31) est rappelée par le ressort (39). La surface de butée convexe (35) est destinée à coopérer avec la portée inférieure (42) de la pale (21) de la même manière que dans l'exemple précédent. Mais, dans cet exemple, la portée inférieure (42) présente, du côté opposé à sa piste tournée vers la broche (13), une encoche (58) ayant un profil concave de révolution autour de l'axe d'incidence de la pale (21). Cette encoche (58) est destinée à coopérer avec l'extrémité en forme de becquet (60) d'une seconde masselotte inférieure (59), conformée en chape montée pivotante par ses deux bras (61) de part et d'autre d'un talon (62). Ce dernier, de forme arrondie, est en saillie radialement vers l'extérieur et vers le bas par rapport au plateau inférieur (3). La masselotte (59), qui pivote autour d'un axe (63), est escamotée (figure 5) c'est-à-dire déplacée radialement vers l'extérieur et écartée de la portée inférieure (42), en vol, par la force centrifuge, et elle est rappelée radialement vers l'intérieur (figure 4), aux vitesses faibles ou nulle du rotor, par un ressort de traction (64) qui passe entre les bras (61) de la chape et est accroché à une attache (65) sous la masselote (59) et à une attache (66) sur le talon (62). Au sol, la masselotte (59) vient immobiliser le mouvement de la pale vers le haut par l'engagement de son becquet (60) dans l'encoche (58) de la portée inférieure (42). Le profil de révolution de l'encoche (58) autorise les mouvements de pas de la pale (21) lorsque l'hélicoptère est au sol. Lorsque la masselotte (59) est escamotée, en vol, la pale (21) peut se « décoller » de son appui par la portée inférieure (42) contre la surface de butée convexe (35) de la butée basse, et comme cela est représenté sur les figures 5 et 17, la butée basse peut ensuite s'escamoter à son tour par rotation de l'organe d'appui (30) autour de la broche (13). Inversement, lorsque la vitesse du rotor est diminuée, la butée basse est d'abord rappelée en position par le ressort (39), puis la pale (21) pivote progressivement vers le bas, jusqu'à venir reposer par sa portée (42) contre la butée basse, et enfin le ressort (64) rappelle la masselotte (59) et engage le becquet (60) dans l'encoche (58), avec un petit jeu qui est représenté sur les figures 4 et 16. Au sol, rotor arrêté ou lors du démarrage ou de l'arrêt du rotor, la masselotte (59) sert donc de butée haute qui empêche la pale (21) de s'échapper sous l'action d'un vent violent et continu et/ou en rafales. Le petit jeu existant dans cette configuration entre le becquet (60) et l'encoche (58) permet l'enclenchement et l'escamotage francs dudit becquet dans ladite encoche. Dans cet exemple, la broche (13) présente une extrémité inférieure à tête élargie (67) qui est vissée dans la partie principale de la broche (13), et la tête élargie (67) présente un méplat par lequel elle est bloquée en rotation dans un lamage usiné dans une rondelle (68) solidaire du talon (62) et en appui contre la face inférieure du plateau inférieur (3). Cette seconde réalisation, également très compacte et de conception simple, a l'avantage de procurer un gain de masse appréciable par rapport à la première solution décrite ci-dessus, ainsi que par rapport aux réalisations connues de l'état de la technique.

De plus, au repliage des pales, la présence des butées basses et hautes combinées au-dessous des paliers lamifiés sphériques (9), en liaison avec la présence des pièces anti-recul (25) des pales (21), permet d'éviter que les butées lamifiées (9) ne soient sollicitées en traction ce qui serait très défavorable car ces éléments sont conçus pour être sollicités en compression. Pour le reste, le repliage d'une pale s'effectue aussi facilement que dans l'exemple précédent, par une rotation d'ensemble autour de la broche (13) correspondante.

**Revendications**

1. Dispositif à butées escamotables destinées à limiter les battements des pales (21) d'un rotor principal de giravion aux vitesses faibles ou nulle de rotation du rotor, lequel est du type comportant un moyeu (1) comprenant un plateau supérieur (2) et un plateau inférieur (3), et accouplé au pied de chaque pale (21) par l'intermédiaire d'au moins un dispositif d'articulation (9) sur lequel les axes de battement, de traînée et d'incidence de la pale correspondante (21) se coupent en un seul point, et qui comprend une unique broche (13) de liaison aux plateaux (2, 3) et de retenue de la pale correspondante (21) au moyeu (1), le dispositif à butées comprenant, pour chaque pale (21), une butée inférieure indépendante constituée d'un organe d'appui (30) et d'une masselotte (32) portée à l'extrémité d'un bras (31) de l'organe d'appui (30), et montée pivotante sur le moyeu (1), ainsi qu'une portée inférieure (42) solidaire du pied de pale (21) ou d'un organe de liaison reliant le pied de pale (21) au dispositif d'articulation (9), et située sous ledit pied de pale (21) ou ledit organe de liaison, la butée inférieure (30, 32) étant soumise à l'action d'un ressort de rappel (39) de sorte que la position de la butée inférieure résulte de l'équilibre entre la force centrifuge et la force de rappel élastique du ressort (39), en fonction du régime de rotation du rotor, et qu'aux vitesses faibles ou nulle du rotor, le ressort (39) rappelle la butée inférieure (30, 32) dans une position de coopération de l'organe d'appui (30) et de la portée inférieure (42), afin de limiter les battements de la pale (21) vers le bas, tandis qu'aux vitesses élevées du rotor, la force centrifuge escamote la butée inférieure (30, 32) à l'encontre du ressort (39) en la faisant pivoter afin que l'organe d'appui (30) ne s'oppose pas aux battements vers le bas de la pale (21), caractérisé en ce que l'organe d'appui (30) a sensiblement la forme d'un galet bombé qui présente un évidement circulaire par lequel il est monté pivotant autour de l'axe de l'unique broche (13) de retenue de la pale (21) correspondante au moyeu (1), au-dessus du plateau inférieur (3), et une partie en saillie vers l'extérieur par rapport à l'axe de l'évidement circulaire et au moins partiellement délimitée par une surface de butée convexe (35) contre laquelle la portée inférieure (42) est destinée à venir en contact.

2. Dispositif à butées escamotables selon la revendication 1, caractérisé en ce que sur chaque butée inférieure (30, 32), la surface de butée convexe (35) s'étend, dans une direction perpendiculaire à l'axe de la broche (13), sur toute la plage de pas de la pale correspondante (21), entre deux positions extrêmes (55, 56) qui correspondent, l'une, au pas minimum obtenu lorsque les pas cyclique et collectif sont minimum, et l'autre au pas maximum obtenu lorsque les pas cyclique et collectif sont maximum, et de sorte que, pour un pas moyen, obtenu lorsque le pas cyclique est nul et le pas collectif petit, et à l'arrêt du rotor, le contact entre la portée inférieure (42) et la surface de butée convexe (35) s'effectue dans une position intermédiaire, afin qu'aux vitesses faibles ou nulle du rotor, le contact entre la portée inférieure (42) et la surface de butée convexe (35) ne soit pas rompu lorsque la position angulaire de la pale (21) autour de son axe longitudinal est modifiée par la manœuvre des commandes de vol.

3. Dispositif à butées escamotables selon la revendication 2, caractérisé en ce que, d'un côté de la surface de butée convexe (35), la partie en saillie de l'organe d'appui (30) correspondant se prolonge par une portion sensiblement rectiligne (36) contre laquelle s'appuie la portée inférieure correspondante (42) lorsque la pale (21) correspondante a tendance à prendre un angle de battement négatif trop important aux vitesses de rotation élevées du rotor.

4. Dispositif à butées escamotables selon l'une des revendications 1 à 3, caractérisé en ce que la surface de butée convexe (35) est telle que son intersection avec un plan perpendiculaire à l'axe de la broche (13) correspondante ou avec un plan passant par l'axe de cette broche (13) a sensiblement la forme d'un arc de cercle dont le centre est situé du côté de l'axe de la broche (13).

5. Dispositif à butées escamotables selon l'une des revendications 1 à 4, caractérisé en ce que chaque portée inférieure (42) présente une piste plane (41) de contact avec la surface de butée convexe (35) correspondante, ladite piste (41) étant perpendiculaire à l'axe d'incidence de la pale (21) correspondante.

6. Dispositif à butées escamotables selon l'une des revendications 1 à 4, caractérisé en ce que chaque portée inférieure (42) présente une piste concave de contact avec la surface de butée convexe (35) correspondante, ladite piste concave ayant un rayon de courbure supérieur à celui de la surface de butée convexe (35) correspondante.

7. Dispositif à butées escamotables selon l'une des revendications 2 à 6, caractérisé en ce que l'extrémité (56) de la surface de butée convexe (35) qui, dans la position extrême correspondant au pas maximum, est en contact avec la portée inférieure correspondante (42), est située du même côté de l'axe d'incidence de la pale correspondante (21) que la masselotte (32), aux vitesses faibles ou nulle du rotor.

8. Dispositif à butées escamotables selon l'une des revendications 1 à 7, caractérisé en ce que chaque butée inférieure (30, 32) est escamotée par la force centrifuge lorsque la vitesse du rotor atteint sensiblement la moitié du régime de rotation nominal.

9. Dispositif à butées escamotables selon l'une des revendications 1 à 8, destiné à un rotor dont le dispositif d'articulation de chaque pale (21) au moyeu (1) est un palier sphérique lamifié (9) comprenant un élément rigide radial interne (11), mobile par rapport aux plateaux (2, 3), et sur lequel est retenue une boucle rigide (22) contournant de façon continue le palier sphérique lamifié (9) et solidaire de l'ossature résistante de la pale correspondante (21) ou d'un organe de liaison solidarisé au pied de la pale correspondante, ainsi qu'un élément rigide radial externe (12), fixé entre les bords des plateaux (2, 3), à la façon d'une entretoise, et constitué d'un manchon dont l'alésage est traversé par l'unique broche (13) de liaison autour de laquelle la pale correspondante (21) peut être pivotée, caractérisé en ce que l'organe d'appui (30) de la butée inférieure correspondante est monté pivotant par son évidement circulaire autour d'une bague anti-frottement (37) montée à ajustage serré autour de l'extrémité inférieure du manchon (12) et sur laquelle est accrochée une extrémité du ressort (39) de rappel de la butée inférieure (30, 32).

10. Dispositif à butées escamotables selon l'une des revendications 1 à 9 caractérisé en ce qu'il comprend, de plus, pour chaque pale (21), une butée supérieure indépendante constituée d'un organe d'appui (46) et d'une masselotte (50) portée à l'extrémité d'un bras (49) de l'organe d'appui (46), et montée pivotante sur le moyeu (1), ainsi qu'une portée supérieure (44) solidaire du pied de pale (21) ou d'un organe de liaison reliant le pied de pale au dispositif d'articulation (9), et située sur ledit pied de pale (21) ou ledit organe de liaison, la butée supérieure (46, 50) étant soumise à l'action d'un ressort de rappel (53) de sorte que la position de la butée supérieure (46, 50) résulte de l'équilibre entre la force centrifuge et la force de rappel élastique du ressort (53), en fonction du régime de rotation du rotor, et qu'aux vitesses faibles ou nulle du rotor le ressort (53) rappelle la butée supérieure (46, 50) dans une position de coopération de l'organe d'appui (46) et de la portée supérieure (44) afin de limiter les battements de la pale (21) vers le haut, tandis qu'aux vitesses élevées du rotor, la force centrifuge escamote la butée supérieure (46, 50) à l'encontre du ressort (53) en la faisant pivoter afin que l'organe d'appui (46) ne s'oppose pas aux battements vers le haut de la pale (21).

11. Dispositif à butées escamotables selon la revendication 10, caractérisé en ce que l'organe d'appui (46) de chaque butée supérieure a également la forme sensiblement d'un galet bombé qui présente un évidement circulaire par lequel il est monté pivotant autour de l'axe de l'unique broche (13) de retenue de la pale (21) au moyeu (1), au-dessous du plateau supérieur (2), et une partie en saillie (48) vers l'extérieur par rapport à l'axe de l'évidement circulaire et au moins partiellement délimitée par une surface de butée cylindrique centrée sur l'axe de la broche (13), et contre laquelle la portée supérieure (44) est destinée à venir en contact.

12. Dispositif à butées escamotables selon la revendication 11, caractérisé en ce que chaque portée supérieure (44) présente une piste plane (45) de contact avec la surface de butée cylindrique (48) correspondante, ladite piste (45) étant perpendiculaire à l'axe d'incidence de la pale correspondante (21).

13. Dispositif à butées escamotables selon l'une des revendications 10 à 12, caractérisé en ce que chaque butée supérieure (46, 50) est escamotée par la force centrifuge lorsque la vitesse du rotor atteint sensiblement le quart du régime de rotation nominale.

14. Dispositif à butées escamotables selon l'une des revendications 10 à 13, telle que rattachée à la revendication 9, caractérisé en ce que l'organe d'appui (46) de la butée supérieure est monté pivotant par son évidement circulaire autour d'une bague (51) antifrottement montée à ajustage serré autour de l'extrémité supérieure du manchon (12) et sur laquelle est accrochée une extrémité du ressort de rappel (53) de la butée supérieure (46, 50).

15. Dispositif à butées escamotables selon l'une des revendications 1 à 9, caractérisé en ce qu'il comprend de plus, pour chaque pale (21), une seconde masselotte inférieure (59) montée pivotante par rapport au moyeu (1) autour d'un axe perpendiculaire à l'axe de la broche correspondante (13) et à l'axe d'incidence de la pale (21), et présentant une partie en forme de becquet (60) tourné vers la broche (13) et qui est engagé, aux vitesses faibles ou nulle du rotor, dans une encoche (58) présentée par la portée inférieure (42) correspondante, du côté opposé à la broche (13), sous l'effet du rappel élastique exercé radialement et vers l'intérieur par un second ressort (64) sur la seconde masselotte (59) déplacée vers la portée inférieure (42), afin de bloquer les battements de la pale (21) vers le haut, tandis qu'aux vitesses élevées du rotor, la seconde masselotte (59) est escamotée radialement vers l'extérieur par la force centrifuge qui la fait pivoter à l'encontre du second ressort (64) et la dégage de la portée inférieure (42) afin de ne pas s'opposer aux battements vers le haut de la pale (21).

16. Dispositif à butées escamotables selon la revendication 15, caractérisé en ce que l'encoche (58) de la portée inférieure (42) présente un profil de révolution concave autour de l'axe d'incidence de la pale correspondante (21), afin d'autoriser les mouvements d'incidence de la pale (21).

17. Dispositif à butées escamotables selon l'une des revendications 15 et 16 caractérisé en ce que lorsque la portée inférieure (42) est en appui par sa piste contre la surface de butée convexe (35), le becquet (60) est reçu avec du jeu dans l'encoche (58).

18. Dispositif à butées escamotables selon l'une des revendications 15 à 17, caractérisé en ce que la seconde masselotte (59) est portée à l'extrémité radiale externe d'une chape dont les deux bras (61) sont pivotés de part et d'autre d'un talon (62) en saillie radiale vers l'extérieur que présente une bague (68) entourant, sous le plateau inférieur (3), l'extrémité inférieure de la broche correspondante (13), le second ressort (64) étant un ressort à boudin longitudinal et de traction qui s'étend entre les deux bras (61) de la chape et relie la seconde masselotte (59) au talon (62).

19. Dispositif à butées escamotables selon la revendication 18, caractérisé en ce que l'extrémité inférieure de la broche (13) porte une tête de retenue élargie (67) présentant un méplat coopérant avec un épaulement du talon (62) afin d'empêcher toute rotation de la broche (13).

20. Dispositif à butées escamotables selon l'une des revendications 1 à 19, caractérisé en ce qu'aux vitesses faibles, ou nulle du rotor, la position de la masselotte (32, 50) de chaque butée inférieure et/ou, éventuellement, de chaque butée supérieure, par rapport à l'axe de la broche correspondante (13), est inclinée d'environ 45° sur l'axe d'incidence de la pale correspondante (21) et vers l'intérieur par rapport à l'axe de la broche (13).

21. Dispositif à butées escamotables selon l'une des revendications 1 à 20, caractérisé en ce que chaque butée inférieure (30, 32) et/ou éventuellement supérieure (46, 50) est élastiquement rappelée par un ressort de traction à boudin longitudinal (39, 53) s'étendant sensiblement radialement par rapport à l'axe de la broche (13) entre la masselotte correspondante (32, 50) et un point d'ancrage fixe (38, 52) par rapport au moyeu (1).

22. Dispositif à butées escamotables selon l'une des revendications 1 à 20, caractérisé en ce que chaque butée inférieure (30, 32) et/ou éventuellement supérieure (46, 50) est élastiquement rappelée par un ressort de traction à spirale (57) qui entoure la broche (13) et est accroché par une extrémité à l'organe d'appui correspondant (30, 46) et par l'autre extrémité à un point d'ancrage fixe par rapport au moyeu (1).

23. Dispositif à butées escamotables selon l'une des revendications 1 à 22, caractérisé en ce que chaque pale (21) comprend un levier de commande de pas en forme d'étrier dont les branches s'étendent transversalement l'une (28) par dessus et l'autre (27) par dessous le pied de pale (21) où l'organe de liaison au pied de pale correspondant, la portée inférieure correspondante (42) étant fixée à la face inférieure de la branche inférieure (27) et éventuellement, la portée supérieure (44) correspondante étant fixée à la face supérieure de la branche supérieure (28) du levier.

**Claims**

1. Device with retractable stops designed to limit the flapping of the blades (21) of a rotorplane's main rotor at low or zero speeds of rotation of the rotor, which device is of the type comprising a hub (1) which comprises an upper plate (2) and a lower plate (3) and is coupled to the root of each blade (21) by way of at least one articulation means (9) at which the flapping and drag axes and the axis of incidence of the corresponding blade (21) intersect at one point only, and which comprises a single pin (13) for connection to the plates (2, 3) and for retaining the corresponding blade (21) on the hub (1), the stop device comprising for each blade (21) an independent lower stop that is formed by a support member (30) and a counterweight (32) supported at the end of an arm (31) of the support member (30) and is pivotally mounted on the hub (1), together with a lower abutment (42) that is integrally formed with the root of the blade (21) or with a connecting element connecting the root of the blade (21) to the articulation means (9) and that is situated under the said root of the blade (21) or the said connecting element, the lower stop (30, 32) being subjected to the action of a return spring (39) so that the position of the lower stop results from the equilibrium between the centrifugal force and the resilient return force of the spring (39) as a function of the rotational speed of the rotor, and so that at low or zero speeds of the rotor the spring (39) returns the lower stop (30, 32) to a position of cooperation of the support member (30) and the lower abutment (42), so as to limit the downward flapping of the blade (21), whilst at elevated speeds of the rotor, the centrifugal force retracts the lower stop (30, 32) against the spring (39) by making it pivot so that the support member (30) does not oppose downward flapping of the blade (21), characterised in that the support member (30) is approximately in the form of a rounded disc that has a circular aperture by means of which it is pivotally mounted about the axis of the single pin (13) for retaining the corresponding blade (21) on the hub (1), above the lower plate (3), and that has a portion that projects outwardly from the axis of the circular aperture and is at least partially defined by a convex stop face (35) against which the lower abutment (42) is designed to come to bear.

2. Device with retractable stops according to claim 1, characterised in that on each lower stop (30, 32), the convex stop face (35) extends in a direction perpendicular to the axis of the pin (13), over the entire range of pitch of the corresponding blade (21), between two end positions (55, 56) of which one corresponds to the minimum pitch obtained when the cyclic and common pitches are minimum, and of which the other corresponds to the maximum pitch obtained when the cyclic and common pitches are maximum, with the result that for a medium pitch, obtained when the cyclic pitch is zero and the common pitch is small, and when the rotor stops, the contact between the lower abutment (42) and the convex stop face (35) occurs in an intermediate position, in order that at low or zero speeds of the rotor the contact between the lower abutment (42) and the convex stop face (35) is not broken when the angular position of the blade (21) about its longitudinal axis is modified by the operation of the flight controls.

3. Device with retractable stops according to claim 2, characterised in that at one side of the convex stop face (35) the projecting portion of the corresponding support member (30) is lengthened by an approximately rectilinear portion (36) against which the corresponding lower abutment (42) bears when the corresponding blade (21) tends to adopt too large a negative flapping angle at elevated speeds of rotation of the rotor.

4. Device with retractable stops according to one of claims 1 to 3, characterised in that the convex stop face (35) is such that its intersection with a plane perpendicular to the axis of the corresponding pin (13) or with a plane passing through the axis of this pin (13) is approximately in the shape of an arc of a circle of which the centre is situated on the side of the axis of the pin (13).

5. Device with retractable stops according to one of claims 1 to 4, characterised in that each lower abutment (42) has a planar contact face (41) for the corresponding convex stop face (35), the said face (41) being perpendicular to the axis of incidence of the corresponding blade (21).

6. Device with retractable stops according to one of claims 1 to 4, characterised in that each lower abutment (42) has a concave contact face for the corresponding convex stop face (35), the said concave face having a radius of curvature greater than that of the corresponding convex stop face (35).

7. Device with retractable stops according to one of claims 2 to 6, characterised in that the end (56) of the convex stop face (35) which, in the end position corresponding to the maximum pitch, is in contact with the corresponding lower abutment (42), is situated at the same side of the axis of incidence of the corresponding blade (21) as the counterweight (32), at low or zero speeds of the rotor.

8. Device with retractable stops according to one of claims 1 to 7, characterised in that each lower stop (30, 32) is retracted by the centrigual force when the speed of the rotor reaches approximately half of the nominal rotational speed.

9. Device with retractable stops according to one of claims 1 to 8, designed for a rotor of which the articulation means for each blade (21) on the hub (1) is a spherical laminated bearing (9) comprising an internal rigid radial element (11), movable in relation to the plates (2, 3), and on which there is held a fixed loop (22) passing continuously around the spherical laminated bearing (9) and integrally formed with the strong frame of the corresponding blade (21) or with a connecting element integral with the root of the corresponding blade, and also comprising an external rigid radial element (12) that is fixed between the edges of the plates (2, 3), in the manner of a spacer, and formed by a sleeve of which the bore is passed through by the single connecting pin (13) about which the corresponding blade (21) may be pivoted, characterised in that the support member (30) of the corresponding lower stop is pivotally mounted by way of its circular aperture about an anti-friction collar (37) mounted to fit closely about the lower end of the sleeve (12) and to which there is coupled one end of the return spring (39) of the lower stop (30, 32).

10. Device with retractable stops according to one of claims 1 to 9, characterised in that it further comprises, for each blade (21), an independent upper stop that is formed by a support member (46) and a counterweight (50) supported at the end of an arm (49) of the support member (46) and is pivotally mounted on the hub (1), together with an upper abutment (44) that is integrally formed with the root of the blade (21) or with a connecting element connecting the root of the blade to the articulation means (9), and that is situated on the said root of the blade (21) or the said connecting element, the upper stop (46, 50) being subjected to the action of a return spring (53) so that the position of the upper stop (46, 50) results from the equilibrium between the centrifugal force and the resilient return force of the spring (53), as a function of the rotational speed of the rotor, and so that at low or zero speeds of the rotor the spring (53) returns the upper stop (46, 50) to a position of cooperation of the support member (46) and the upper abutment (44) so as to limit the upward flapping of the blade (21), whilst at elevated speeds of the rotor the centrifugal force retracts the upper stop (46, 51) against the spring (53) by making it pivot so that the support member (46) does not oppose the upward flapping of the blade (21).

11. Device with retractable stops according to claim 10, characterised in that the support member (46) of each upper stop is also approximately in the shape of a rounded disc having a circular aperture by means of which it is pivotally mounted about the axis of the single pin (13) for retaining the blade (21) on the hub (1), below the upper plate (2), and a portion (48) that projects outwardly from the axis of the circular aperture and that is at least partially defined by a cylindrical stop face centred on the axis of the pin (13) and against which the upper abutment (44) is designed to bear.

12. Device with retractable stops according to claim 11, characterised in that each upper abutment (44) has a planar contact face (45) for the corresponding cylindrical stop face (48), the said face (45) being perpendicular to the axis of incidence of the corresponding blade (21).

13. Device with retractable stops according to one of claims 10 to 12, characterised in that each upper stop (46, 50) is retracted by the centrifugal force when the speed of the rotor reaches approximately a quarter of the nominal rotational speed.

14. Device with retractable stops according to one of claims 10 to 13, as appended to claim 9, characterised in that the support member (46) of the upper stop is pivotally mounted by way of its circular aperture about an anti-friction collar (51) mounted to fit closely about the upper end of the sleeve (12) and to which there is coupled one end of the return spring (53) of the upper stop (46, 50).

15. Device with retractable stops according to one of claims 1 to 9, characterised in that it further comprises, for each blade (21), a second lower counterweight (59) pivotally mounted in relation to the hub (1) about an axis perpendicular to the axis of the corresponding pin (13) and to the axis of incidence of the blade (21), and having a portion in the form of a beak (60) that faces the pin (13) and that is engaged, at low or zero speeds of the rotor, in a slot (58) in the corresponding lower abutment (42), on the side opposite to the pin (13), under the resilient return action, exerted

15

radially and towards the inside, of a second spring (64) on the second counterweight (59) displaced towards the lower abutment (42), so as to block the upward flapping of the blade (21), whilst at elevated speeds of the rotor, the second counterweight (59) is radially retracted towards the outside by the centrifugal force which causes it to pivot against the second spring (64) and disengages it from the lower abutment (42) so as not to oppose upward flapping of the blade (21).

16. Device with retractable stops according to claim 15, characterised in that the slot (58) in the lower abutment (42) has a concave profile of revolution about the axis of incidence of the corresponding blade (21) so as to permit adjustment of incidence of the blade (21).

17. Device with retractable stops according to one of claims 15 and 16, characterised in that when the lower abutment (42) is bearing with its face against the convex stop face (35), the beak (60) is received in the slot (58) with some clearance.

18. Device with retractable stops according to one of claims 15 to 17, characterised in that the second counterweight (59) is supported at the outer radial extremity of a catch of which the two arms (61) are pivoted on both sides of a lug (62), projecting radially outwards, on a collar (68) that surrounds, under the lower plate (3), the lower end of the corresponding pin (13), the second spring (64) being a longitudinal coil tension spring which extends between the two arms (61) of the catch and connects the second counterweight (59) to the lug (62).

19. Device with retractable stops according to claim 18, characterised in that the lower end of the pin (13) carries an enlarged retaining head (67) having a surface plane cooperating with a shoulder of the lug (62) so as to prevent any rotation of the pin (13).

20. Device with retractable stops according to one of claims 1 to 19, characterised in that at low or zero speeds of the rotor, the position of the counterweight (32, 50) of each lower stop and/or, where applicable, of each upper stop, in relation to the axis of the corresponding pin (13) is inclined at approximately 45° to the axis of incidence of the corresponding blade (21) and towards the inside in relation to the axis of the pin (13).

21. Device with retractable stops according to one of claims 1 to 20, characterised in that each lower stop (30, 32) and/or, where applicable, each upper stop (46, 50) is resiliently returned by a longitudinal coil tension spring (39, 53) extending approximately radially in relation to the axis of the pin (13) between the corresponding counterweight (32, 50) and an anchorage point (38, 52) fixed in relation to the hub (1).

22. Device with retractable stops according to one of claims 1 to 20, characterised in that each lower stop (30, 32) and/or, where applicable, upper stop (46, 50) is resiliently returned by a spiral traction spring (57) which surrounds the pin (13) and is coupled, at one end, to the corresponding support member (30, 46) and, at the other end, to an anchorage point fixed in relation to the hub (1).

23. Device with retractable stops according to one of claims 1 to 22, characterised in that each blade (21) comprises a pitch control lever in the form of a stirrup of which one of the arms (28) extends transversely above and the other (27) transversely below the root of blade (21) or the connecting member to the corresponding blade, the corresponding lower abutment (42) being fixed to the lower face of the lower arm (27) and, where applicable, the corresponding upper abutment (44) being fixed to the upper face of the upper arm (28) of the lever.

**Patentansprüche**

1. Einfahrbare Anschlagvorrichtung zum Begrenzen der Schlagbewegungen der Blätter (21) des Hauptrotors eines Hubschraubers bei geringen Drehgeschwindigkeiten oder bei der Drehgeschwindigkeit Null des Rotors, dessen Ausführung eine Nabe (1) aufweist, die eine obere Scheibe (2) und eine untere Scheibe (3) enthält und am Fuß jedes Blattes (21) unter Zwischenlegung wenigstens einer Gelenkvorrichtung (9) zusammengefügt ist, in der sich die Achsen der Schlagbewegung, des Luftwiderstands und der Trimmlage des zugehörigen Blattes (21) in einem Punkt schneiden, und die einen einzigen Bolzen (13) zur Verbindung an der Scheiben (2, 3) und zur Halterung des zugehörigen Blattes (21) an der Nabe (1) enthält, wobei die Anschlagvorrichtung einen unabhängigen unteren Anschlag für jedes Blatt (21) aufweist, der aus einem Stützteil (30) und einem am Ende eines Armes (31) des Stützteiles (30) angebrachten Reguliergewicht (32) gebildet und schwenkbar an der Nabe (1) angeordnet ist, sowie eine untere Auflagefläche (42), die mit dem Fuß des Blattes (21) oder mit einem den Fuß des Blattes (21) mit der Gelenkvorrichtung (9) verbindenden Element formschlüssig verbunden und unterhalb des genannten Fußes des Blattes (21) oder des genannten Verbindungselementes angeordnet ist, wobei der untere Anschlag (30, 32) derart der Einwirkung einer Rückstellfeder (39) ausgesetzt ist, daß im Betriebsdrehzahlbereich des Rotors die Stellung des unteren Anschlags sich aus dem Gleichgewicht zwischen der Zentrifugalkraft und der Federkraft der Rückstellfeder (39) ergibt, und daß bei geringeren Geschwindigkeiten oder der Geschwindigkeit Null des Rotors die Feder (39) den unteren Anschlag (30, 32) in eine Stellung zurückstellt, in der das Stützteil (30) und die untere Auflagefläche (42) zusammenwirken, um die Schlagbewegungen des Blattes (21) nach unten zu begrenzen, während bei erhöhten Geschwindigkeiten des Rotors die Zentrifugalkraft gegen die Feder (39) den unteren Anschlag (30, 32) durch Schwenken einzieht, damit sich das Stützteil (30) den Schlagbewegungen des Blattes (21) nach unten nicht entgegenstellt, dadurch gekennzeichnet, daß das Stützteil (30) etwa die Form einer ausgebauchten Rolle hat, die eine kreisförmige Aussparung aufweist, mit der sie oberhalb der unteren Scheibe (3) um die Achse des einzigen Bolzens (13) zur Halterung des zugehörigen Blattes (21) schwenkbar an der Nabe (1) angeordnet ist, und die einen Bereich aufweist, der bezüglich der Achse der kreisförmigen Aussparung nach außen absteht und zumindest teilweise durch eine konvexe Anschlagfläche (35) begrenzt ist, die zum Kontakt mit der unteren Auflagefläche (42) bestimmt ist.

2. Anschlagvorrichtung nach Anspruch 1, dadurch gekennzeichnet, daß die konvexe Anschlagfläche (35) sich bei jedem unteren Anschlag (30, 32) über den gesamten Steigungsbereich des zugehörigen Blattes (21) in einer zur Achse des Bolzens (13) lotrechten Richtung zwischen zwei extremen Stellungen (55, 56) erstreckt, von denen die eine der minimalen Steigung zugeordnet ist, die bei minimaler zyklischer und kollektiver Steigung erreicht wird, und die andere der maximalen Steigung zugeordnet ist, die bei maximaler zyklischer und kollektiver Steigung erreicht wird, derart, daß für eine mittlere Steigung, die erreicht wird, wenn die zyklische Steigung Null und die kollektive Steigung klein ist, und beim Stillstand des Rotors der Kontakt zwischen der unteren Auflagefläche (42) und der konvexen Anschlagfläche (35) in einer Zwischenstellung zustande kommt, um bei geringen Geschwindigkeiten oder der Geschwindigkeit Null des Rotors den Kontakt zwischen der unteren Auflagefläche (42) und der konvexen Anschlagfläche (35) nicht zu unterbrechen, wenn die Winkelstellung des Blattes (21) um seine Längsachse durch Steuermanöver verändert wird.

3. Anschlagvorrichtung nach Anspruch 2, dadurch gekennzeichnet, daß an einer Seite der konvexen Anschlagfläche (35) der von dem zugehörigen Stützteil (30) abstehende Bereich durch ein etwa geradliniges Teil (36) verlängert ist, gegen das sich die zugehörige untere Auflagefläche (42) abstützt, wenn das zugehörige Blatt (21) bei erhöhten Drehgeschwindigkeiten des Rotors zu viel zu großen negativen Schlagwinkeln neigt.

4. Anschlagvorrichtung nach einem der Ansprüche 1 bis 3, dadurch gekennzeichnet, daß die konvexe Anschlagfläche (35) derart ausgestaltet ist, daß ihr Schnitt in einer zur Achse des zugehörigen Bolzens (13) lotrechten Ebene oder in einer die Achse dieses Bolzens (13) enthaltenden Ebene etwa die Form eines Kreisbogens hat, dessen Mittelpunkt auf der Seite der Achse des Bolzens (13) angeordnet ist.

5. Anschlagvorrichtung nach einem der Ansprüche 1 bis 4, dadurch gekennzeichnet, daß jede untere Auflagefläche (42) für den Kontakt mit der zugehörigen konvexen Anschlagfläche (35) eine ebene Spur (41) aufweist, die lotrecht zur Achse der Trimmlage des zugehörigen Blattes (21) angeordnet ist.

6. Anschlagvorrichtung nach einem der Ansprüche 1 bis 4, dadurch gekennzeichnet, daß jede untere Auflagefläche (42) für den Kontakt mit der zugehörigen konvexen Anschlagfläche (35) eine konkave Spur aufweist, die einen größeren Krümmungsradius als die zugehörige konvexe Anschlagfläche (35) hat.

7. Anschlagvorrichtung nach einem der Ansprüche 2 bis 6, dadurch gekennzeichnet, daß das Ende (56) der konvexen Anschlagfläche (35), das in der der maximalen Steigung zugehörigen extremen Stellung mit der zugehörigen unteren Auflagefläche (42) in Kontakt ist, bei geringen Geschwindigkeiten oder der Geschwindigkeit Null des Rotors auf derselben Seite der Achse der Trimmlage des zugehörigen Blattes (21) angeordnet ist wie das Reguliergewicht (32).

8. Anschlagvorrichtung nach einem der Ansprüche 1 bis 7, dadurch gekennzeichnet, daß jeder untere Anschlag (30, 32) durch die Zentrifugalkraft eingefahren wird, wenn die Geschwindigkeit des Rotors etwa die Hälfte des Nenndrehzahlbereiches erreicht.

9. Anschlagvorrichtung nach einem der Ansprüche 1 bis 8 für einen Rotor, dessen Gelenkvorrichtung für jedes Blatt (21) zur Nabe (1) aus einem kugelförmigen Lager (9) aus Schichtstoffen besteht, mit einem inneren radial starren Element (11), das bezüglich der Scheiben (2, 3) beweglich ist, und an dem eine starre Schlaufe (22) gehalten ist, die das kugelförmige Lager (9) aus Schichtstoffen ohne Unterbrechung umgibt, und die mit dem festen Gerippe des zugehörigen Blattes (21) oder mit einem mit dem Fuß des zugehörigen Blattes verbundenen Verbindungsteil formschlüssig verbunden ist, sowie mit einem äußeren radial starren Element (12), das zwischen den Rändern der Scheibe (2, 3) wie eine Art Querstrebe befestigt ist, und das von einer Hülse gebildet ist, deren Bohrung von dem einzigen Verbindungsbolzen (13) durchdrungen ist, um den das zugehörige Blatt (21) schwenkbar ist, dadurch gekennzeichnet, daß das Stützteil (30) des zugehörigen unteren Anschlags mit seiner kreisförmigen Aussparung schwenkbar auf einen Gleitring (37) aufgesteckt ist, der eng eingepaßt auf das untere Ende der Hülse (12) aufgesteckt ist, und an dem ein Ende der Rückstellfeder (39) des unteren Anschlags (30, 32) festgelegt ist.

10. Anschlagvorrichtung nach einem der Ansprüche 1 bis 9, dadurch gekennzeichnet, daß des weiteren für jedes Blatt (21) ein unabhängiger oberer Anschlag vorgesehen ist, der aus einem Stützteil (46) und einem am Ende eines Armes (49) des Stützteiles (46) angebrachten Reguliergewicht (50) gebildet und schwenkbar an der Nabe (1) angeordnet ist, sowie mit einer oberen Auflagefläche (44), die mit dem Fuß des Blattes (21) oder mit einem den Fuß des Blattes (21) mit der Gelenkvorrichtung (9) verbindenden Element formschlüssig verbunden und oberhalb des genannten Fußes des Blattes (21) oder des genannten Verbindungselementes angeordnet ist, wobei der obere Anschlag (46, 50) derart der Einwirkung einer Rückstellfeder (53) ausgesetzt ist, daß im Betriebsdrehzahlbereich des Rotors die Stellung des oberen Anschlags (46, 50) sich aus dem Gleichgewicht zwischen der Zentrifugalkraft und der Federkraft der Rückstellfeder (53) ergibt, und daß bei geringen Geschwindigkeiten oder der Geschwindigkeit Null des Rotors die Feder den oberen Anschlag (46, 50) in eine Stellung zurückstellt, in der das Stützteil (46) und die obere Auflagefläche (44) zusammenwirken, um die Schlagbewegungen des Blattes (21) nach oben zu begrenzen, während bei erhöhten Geschwindigkeiten des Rotors die Zentrifugalkraft gegen die Feder (53) den oberen Anschlag (46, 50) durch Schwenken einzieht, damit sich das Stützteil (46) den Schlagbewegungen des Blattes (21) nach oben nicht entgegenstellt.

11. Anschlagvorrichtung nach Anspruch 10, dadurch gekennzeichnet, daß das Stützteil (46) jedes oberen Anschlages ebenfalls etwa die Form einer ausgebauchten Rolle hat, die eine kreisförmige Aussparung aufweist, mit der sie unterhalb der oberen Scheibe (2) um die Achse des einzigen Bolzens (13) zur Halterung des Blattes (21) schwenkbar an der Nabe (1) angeordnet ist, und die einen Bereich (48) aufweist, der bezüglich der Achse der kreisförmigen Aussparung nach außen absteht und der zumindest teilweise durch eine zur Achse des Bolzens (13) zylindrische Anschlagfläche begrenzt ist, die zum Kontakt mit der oberen Auflagefläche (44) bestimmt ist.

12. Anschlagvorrichtung nach Anspruch 11, dadurch gekennzeichnet, daß jede obere Auflagefläche (44) für den Kontakt mit der zugehörigen zylindrischen Anschlagfläche (48) eine ebene Spur (45) aufweist, die lotrecht zur Achse der Trimmlage des zugehörigen Blattes (21) angeordnet ist.

13. Anschlagvorrichtung nach einem der Ansprüche 10 bis 12, dadurch gekennzeichnet, daß jeder obere Anschlag (46, 50) durch die Zentrifugalkraft eingefahren wird, wenn die Geschwindigkeit des Rotors etwa ein Viertel des Nenndrehzahlbereiches erreicht.

14. Anschlagvorrichtung nach einem der Ansprüche 10 bis 13 in Verbindung mit Anspruch 9, dadurch gekennzeichnet, daß das Stützteil (46) des oberen Anschlags mit seiner kreisförmigen Aussparung schwenkbar auf einen Gleitring (51) aufgesteckt ist, der eng eingepaßt auf das obere Ende der Hülse (12) aufgesteckt ist, und an dem ein Ende der Rückstellfeder (53) des oberen Anschlags (46, 50) festgelegt ist.

15. Anschlagvorrichtung nach einem der Ansprüche 1 bis 9, dadurch gekennzeichnet, daß des weiteren für jedes Blatt (21) ein zweites unteres Reguliergewicht (59) vorgesehen ist, das bezüglich der Nabe (1) um eine zur Achse des zugehörigen Bolzens (13) und zur Achse der Trimmlage des Blattes (21) lotrechte Achse schwenkbar angeordnet ist, und das einen Bereich in der Form eines Schnabels (60) aufweist, der zum Bolzen (13) hin ausgerichtet ist, und der bei geringen Geschwindigkeiten oder der Geschwindigkeit Null des Rotors unter der Einwirkung einer radial nach innen gerichteten, von einer zweiten Feder (64) auf das zweite Reguliergewicht (59) ausgeübten Federkraft in eine zur unteren Auflagefläche (42) hin versetzt angeordnete Einkerbung (58) auf der dem Bolzen (13) abgewandten Seite der zugehörigen unteren Auflagefläche (42) eingreift, um die Schlagbewegungen des Blattes (21) nach oben zu blockieren, während bei erhöhten Geschwindigkeiten des Rotors das zweite Reguliergewicht (59) durch die Zentrifugalkraft radial nach außen gezogen ist, wobei die Zentrifugalkraft das zweite Reguliergewicht gegen die zweite Feder (64) verschwenkt und von der unteren Auflagefläche (42) abhebt, um den Schlagbewegungen des Blattes (21) nach oben nicht entgegenzustehen.

16. Anschlagvorrichtung nach Anspruch 15, dadurch gekennzeichnet, daß die Einkerbung (58) der unteren Auflagefläche (42) einen zur Achse der Trimmlage des zugehörigen Blattes (21) konkav gekrümmten Verlauf aufweist, um die Trimmbewegungen des Blattes (21) zu ermöglichen.

17. Anschlagvorrichtung nach einem der Ansprüche 15 und 16, dadurch gekennzeichnet, daß der Schnabel (60) mit Spiel in der Einkerbung (58) angeordnet ist, wenn die untere Auflagefläche (42) sich mit ihrer Spur an der ·konvexen Anschlagfläche (35) abstützt.

18. Anschlagvorrichtung nach einem der Ansprüche 15 bis 17, dadurch gekennzeichnet, daß das zweite Reguliergewicht (59) am radialen äußeren Ende einer Gabel angebracht ist, deren beide Arme (61) nach beiden Seiten schwenkbar an einem Ansatz (62) gehalten sind, der radial nach außen absteht und den ein Ring (68) aufweist, der unterhalb der unteren Scheibe (3) das untere Ende des zugehörigen Bolzens (13) umgibt, wobei die zweite Feder (64) eine längliche Schraubenzugfeder ist, die sich zwischen die beiden Arme (61) der Gabel erstreckt, und die das zweite Reguliergewicht (59) mit dem Ansatz (62) verbindet.

19. Anschlagvorrichtung nach Anspruch 18, dadurch gekennzeichnet, daß das untere Ende des Bolzens (13) mit einem vergrößerten Rückhaltekopf (67) versehen ist, der eine Abflachung aufweist, die mit einem Vorsprung des Ansatzes (62) zusammenwirkt, um jegliche Drehung des Bolzens (13) zu verhindern.

20. Anschlagvorrichtung nach einem der Ansprüche 1 bis 19, dadurch gekennzeichnet, daß bei geringen Geschwindigkeiten oder der Geschwindigkeit Null des Rotors die Stellung des Reguliergewichtes (32, 50) jedes unteren Anschlags und/oder gegebenenfalls jedes oberen Anschlags bezüglich der Achse des zugehörigen Bolzens (13) um etwa 45° zur Achse der Trimmlage des zugehörigen Blattes (21) vom Bolzen (13) aus nach innen geneigt ist.

21. Anschlagvorrichtung nach einem der Ansprüche 1 bis 20, dadurch gekennzeichnet, daß jeder untere Anschlag (30, 32) und/oder gegebenenfalls jeder obere Anschlag (46, 50) von einer länglichen Schraubenzugfeder (39, 53) elastisch zurückgestellt wird, die sich bezüglich der Achse des Bolzens (13) etwa radial zwischen dem zugehörigen Reguliergewicht (32, 50) und einem bezüglich der Nabe (1) festen Anlenkpunkt (38, 52) erstreckt.

22. Anschlagvorrichtung nach einem der Ansprüche 1 bis 20, dadurch gekennzeichnet, daß jeder untere Anschlag (30, 32) und/oder gegebenenfalls jeder obere Anschlag (46, 50) von einer Spiralzugfeder (57) elastisch zurückgestellt wird, die den Bolzen (13) umgibt, und die mit einem Ende an dem zugehörigen Stützteil (30, 46) und mit dem anderen Ende an einem bezüglich der Nabe (1) festen Anlenkpunkt festgelegt ist.

23. Anschlagvorrichtung nach einem der Ansprüche 1 bis 22, dadurch gekennzeichnet, daß jedes Blatt (21) einen bügelförmigen Hebel zur Steuerung der Steigung enthält, von dessen Armen sich der eine (28) oberhalb und der andere (27) unterhalb des Fußes des Blattes (21) oder des Verbindungselementes zu dem Fuß des zugehörigen Blattes in Querrichtung erstreckt, wobei die zugehörige untere Auflagefläche (42) an der unteren Seite des unteren Armes (27) und gegebenenfalls die zugehörige obere Auflagefläche (44) an der oberen Seite des oberen Armes (28) des Hebels befestigt ist.

*Fig.1*

_Fig.2_

_Fig.3_

Fig. 4

*Fig.5*

4

Fig.6

Fig.7

*Fig.9*

*Fig.8*

*Fig.10*

*Fig.11*

Fig.12

Fig.13

Fig.14

Fig.15

*Fig.16*

*Fig.17*